(19) Europäisches Patentamt
European Patent Office
Office européen des brevets

(11) **EP 3 722 965 B1**

(12) **EUROPEAN PATENT SPECIFICATION**

(45) Date of publication and mention
of the grant of the patent:
**12.06.2024 Bulletin 2024/24**

(21) Application number: **19175450.6**

(22) Date of filing: **20.05.2019**

(51) International Patent Classification (IPC):
***G06F 16/178*** *(2019.01)*     ***G06F 16/182*** *(2019.01)*

(52) Cooperative Patent Classification (CPC):
**G06F 16/178; G06F 16/184**

(54) **METHOD, APPARATUS AND COMPUTER PROGRAM FOR SYNCHRONIZING DATA BETWEEN A FIRST REPOSITORY AND A SECOND REPOSITORY**

VERFAHREN, VORRICHTUNG UND COMPUTERPROGRAMM ZUM SYNCHRONISIEREN VON DATEN ZWISCHEN EINEM ERSTEN SPEICHER UND EINEM ZWEITEN SPEICHER

PROCÉDÉ, APPAREIL ET PROGRAMME INFORMATIQUE POUR SYNCHRONISER DES DONNÉES ENTRE UN PREMIER RÉFÉRENTIEL ET UN SECOND RÉFÉRENTIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2019 EP 19168186**

(43) Date of publication of application:
**14.10.2020 Bulletin 2020/42**

(73) Proprietor: **Fraunhofer-Gesellschaft zur Förderung
der angewandten Forschung e.V.
80686 München (DE)**

(72) Inventor: **SHEKOW, Marius
53754 Sankt Augustin (DE)**

(74) Representative: **2SPL Patentanwälte PartG mbB
Landaubogen 3
81373 München (DE)**

(56) References cited:
**US-A1- 2006 242 444     US-A1- 2010 082 534
US-B2- 7 165 248**

- **SANDESH UPPOOR ET AL: "Cloud-based synchronization of distributed file system hierarchies", CLUSTER COMPUTING WORKSHOPS AND POSTERS (CLUSTER WORKSHOPS), 2010 IEEE INTERNATIONAL CONFERENCE ON, 1 September 2010 (2010-09-01), pages 1-4, XP055564346, Piscataway, NJ, USA DOI: 10.1109/CLUSTERWKSP.2010.5613087 ISBN: 978-1-4244-8395-2**

## Description

### Field

Examples relate to a method, apparatus and computer program for synchronizing data between a first repository and a second repository.

### Background

Bi-directional data synchronization is the process of equalizing two data replicas (where each replica is a copy of a pool of structured data). The process first determines the changes in each replica at specific points of time (since the last synchronization), and then applies these detected changes to the respective other replica. The synchronization includes the detection and resolution of conflicts.

One instance of data are hierarchically structured file systems stored on hardware. The data is made accessible by computing devices, such as servers or terminals (=end devices like a Personal Computer (PC), iMac, smartphone, etc.) via file system APIs (Application Programming Interfaces).

File synchronizers are programs that perform file system synchronization. A state-based synchronizer detects changes since the last synchronization by computing the difference between (a) the persisted state of the last synchronization, and (b) the current state of each replica. In contrast (outside the scope of this document), operation-based file synchronizers use a log of operations instead.

Many different definitions of file systems and their operations exist. The present disclosure focuses on one of the most efficient ones, which is a model where each object is either of type file or directory, each with a unique ID, and a name. Files can have arbitrary binary bit sequences as contents. The content of a directory is the list of immediate child objects. No two sibling objects may have the same name, and every object is reachable from a well-known root object. The unique ID of each object may be vital, as it allows for unambiguous and efficient detection of create, edit, delete and move operations in the replicas.

An algorithm designer of a bi-directional, state-based file synchronizer, which is applied to file system replicas with above definition, may face many challenges.

US patent application US 2006/0242444 A1 relates to a concept for constraint-based conflict handling for file synchronization. In said application, a concept is used that is based on a selection of "winning" and "losing" operations. The concept supports the detection of cycles, and uses temporary renaming of files to break the cycles.

US 2010082534 A1 titled "Method and System of Managing Conflicts for a Set of Synchronized Folders" discusses a system and process that allows conflicts in a synchronized folder to be resolved. In this system, each device within a mesh operating environment is configured to perform the same processing, ensuring that the synchronized folder appears identical on all devices. If updates to the local store are unable to be immediately completed due to conflicts, they can be postponed for later attempts when other updates are made to resolve the conflict. Users can address conflicts by selecting a preferred option, or conflicts may resolve themselves if subsequent updates override previous ones.

US 7165248 B2 titled "File tree conflict processor" discusses a method for resolving conflicts between parallel changes made by users to two synchronized sets of folders and files. In one approach, these conflicts are presented to the user through an interface, where the user must indicate the winner of each conflict. Another approach involves combining certain conflicts that cannot be resolved independently and presenting them as a single conflict to the user. Once the user has indicated the winners of the conflicts, the winning operations are implemented on the file tree that is in conflict with them.

There may be a desire for providing an improved file synchronization approach.

### Summary

The invention is defined by the independent claims to which reference should be made.

Embodiments are based on the finding that, in order to synchronize a first and a second repository, a number of steps may be executed to resolve conflicts between the repositories. First, the changes between current versions of the repositories compared to a previous version of the repositories are tracked, to calculate a first and a second plurality of file system operations that explain the differences between the previous and current versions. Afterwards, conflicts between the two pluralities of file system operations are detected and resolved, e.g. using an iterative approach that is based on selecting a winning and a losing operation, in which the losing operation is modified. Subsequently, the remaining operations form a third plurality of file system operations, which is reordered based on operation order dependencies between the operations, thereby detecting and resolving cycles. Once the operations are reordered and cycle free, they may be used to synchronize the repositories. Embodiments thereby address the challenge of how to resolve conflicts such that the conflict resolution cannot fail, handling conflict combinations gracefully and improve the intention of both users who were involved in the conflict(s). Once conflicts are solved, embodiments determine a compatible order of transmitting and applying detected operations to the respective other replica/repository. This may be challenging because state-based inference of these operations does not indicate the order in which they happened, forcing the file synchronization algorithm to find an order that works. The present disclosure also describes how to deal with cyclic dependencies, where a set of operations all must/may have come before the other dependency, which can only be applied to the other replica if the synchronizer injects additional operations which were not originally detected, to break the cyclic dependency.

Embodiments thus provide a method for synchronizing data between a first repository and a second repository, and a computer program having a program code for performing the method. The first repository and second repository are based on an identifier-based file system that supports move operations. The method comprises obtaining information related to a first plurality of file system operations that account for changes of a current state of the first repository vis-à-vis a previous state of the first repository. The method comprises obtaining information related to a second plurality of file system operations that account for changes of a current state of the second repository vis-à-vis a previous state of the second repository. The method comprises determining one or more conflicts between file system operations of the first plurality of file system operations and of the second plurality of file system operations.

Each of the one or more conflicts occur between a first file system operation of the first plurality of file system operations and a second file system operation of the second plurality of file system operations. The method comprises resolving the one or more conflicts to obtain a third plurality of file system operations comprising conflict-resolved versions of the first and second plurality of file system operations. Resolving of the one or more conflicts comprises determining a winning operation and a losing operation among the first and second file system operation based on a selection criterion. Resolving the one or more conflicts comprises changing the losing operation to resolve the conflict, with the winning operation remaining unchanged. The method comprises reordering the third plurality of file system operations based on operation order dependencies between the file system operations of the third plurality of file system operations. The reordering of the third plurality of file system operations comprises detecting of cycles in the reordering of the third plurality of file system operations, and resolving the detected cycles. Each cycle comprises two or more operations of the third plurality of file system operations. The two or more operations comprise a first file system operation that makes a file name available so the file name can be used by a second file system operation. Resolving of the respective cycle comprises inserting an additional renaming operation to make the file name available. The method comprises executing the reordered third plurality of file system operations to synchronize the first repository and the second repository. This method may be used to synchronize the first and second repository even in cases, in which the actual file operations that have occurred are not easily deductible.

Each of the one or more conflicts occurs between a first file system operation of the first plurality of file system operations and a second file system operation of the second plurality of file system operations. In other words, in each conflict, a first file system operation of the first plurality of file system operations may be in conflict with a second file system operation of the second plurality of file system operations. The resolving of the one or more conflicts comprises determining a winning operation and a losing operation among the first and second file system operation based on a selection criterion. For example, the selection criterion may be based on one of an estimated effort of a user for performing the respective operations, a logical location of the repositories the respective operations were performed on, and a user group of a user that has performed the respective operations. For example, the resolving of the one or more conflicts comprises changing the losing operation. By only dealing with one side of the conflict, an impact of the conflict may be reduced while still resolving the conflict.

In at least some embodiments, the resolving of the one or more conflicts comprises sorting the one or more conflicts based on a conflict sorting rule to identify a single conflict to be resolved, resolving the single identified conflict, and resolving the one or more conflicts that remain after the single identified conflict has been resolved. For example, the determining of the one or more conflicts and the resolving of the one or more conflicts may be repeated after resolving the single identified conflict. By resolving one conflict at a time, and then repeating the entire procedure, other conflicts may disappear before they are dealt with.

The method may further comprise detecting one or more pseudo-conflicts between file system operations of the first plurality of file system operations and of the second plurality of file system operations. The one or more pseudo-conflicts may each occur between operations that conflict syntactically while having the same effect. To deal with pseudo-operations, they may be included in the previous states of the repositories. For example, the method may further comprise resolving the one or more pseudo-conflicts by modifying the previous states of the first repository or of the second repository based on detected pseudo-conflicts.

In at least some embodiments, the operation order dependencies are based on a ruleset of operation order dependencies. The ruleset of operation order dependencies may define operations that logically have to occur in a specific order. This ruleset may define a limited number of operation order dependencies that may be used to determine the order of the third plurality of file system operations. Each combination of operation order dependencies that can lead to a cyclic dependency may be associated with a specific approach to break up the cycle, enabling an automatic resolving of cycles.

For example, the ruleset of order dependencies may comprise one or more operation order dependencies that each define a logical order between a first file system operation and a second file system operation. An operation order dependency may be defined between two operations, and may indicate the interdependency between the two operations. The one or more operation order dependencies may comprise one or more of the following operation order dependencies: a) an operation order dependency between the first file system operation and the second file system operation where the first file system operation makes a file name available so the file name can be used by the second file system operation. The one or more operation order dependencies may further comprise b) an operation order dependency between the first file system operation and the second file system operation where the file system operation results in a file or folder being present so that the file or folder can be used by the second file system operation. Each of these types of operation order dependencies may occur in cycles. Consequently, rules may be defined to break up cycles comprising these types of operation order dependencies. Optionally, the one or more operation order dependencies may further comprise c) an operation order dependency where the first file system operation moves a file or folder outside a folder that is deleted by the second file system operation, and/or d) an operation order dependency where the first and second file system operations are move operations affecting a first and second directory respectively, the first and second directories being in a parent-child relationship, both file system operations resulting in the first and second directory having a flipped parent-child relationship.

For example, the operations of the third plurality of file system operations may be swapped in a pair-wise manner in the reordering of the third plurality of file system operations based on the operation order dependencies. The operations that are swapped in the reordering of the third plurality of file system operations may form a subset of operations of the third plurality of file system operations. The cycles may be detected in the reordering of the third plurality of file system operations by attempting to form cycles among the subset of operations of the third plurality of file system operations. The pairwise swaps may identify the operations that are involved in cyclic dependencies.

Embodiments further provide the computer program having the program code for performing the method, when the computer program is executed on a computer, a processor, or a programmable hardware component.

Some examples outside the scope of the present claims relate to an apparatus comprising a processing device, wherein the processing device is configured to execute the method for synchronizing data between a first repository and a second repository. For example, the processing device may be implemented using one or more processing units, any means for processing, such as a processor, a computer or a programmable hardware component being operable with accordingly adapted software. In other words, the described function of the processing device may as well be implemented in software, which is then executed on one or more programmable hardware components. Such hardware components may comprise a general purpose processor, a Digital Signal Processor (DSP), a micro-controller, etc. The apparatus may further comprise one or more interface for exchanging information. The apparatus may further comprise computer memory for storing the information related to the first plurality of file system operations, the information related to the first plurality of file system operations, the third plurality of file system operations, the first repository and/or the second repository, and its previous versions.

Some examples outside the scope of the present claims relate toa method for file synchronization between a first and a second replica of a file system. The method comprises determining a first operation and a second operation (e.g. of the first plurality of file system operations) that had been performed on the file system of the first replica (e.g. the first repository). The method comprises determining an allowable execution order for the first operation and the second operation (e.g. in the reordering of the third plurality of file system operations, the third plurality of file system operations comprising the first and second operation). The method comprises performing the first operation and the second operation to the filesystem of the second replica in the determined execution order (e.g. in the execution of the reordered and cycle-free third plurality of file system operations).

**Brief description of the Figures**

Some examples of apparatuses and/or methods will be described in the following by way of example only, and with reference to the accompanying figures, in which

Figs. 1a and 1b    show flow charts of embodiments of a method for synchronizing data between a first repository and a second repository;

Fig. 2    shows a schematic diagram of a synchronization algorithm according to an embodiment;

Fig. 3    shows an overview of eight order dependencies according to embodiments;

Fig. 4            shows a schematic diagram of cycles; and

Fig. 5            illustrates how to break a cyclic order dependency.

**Detailed Description**

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

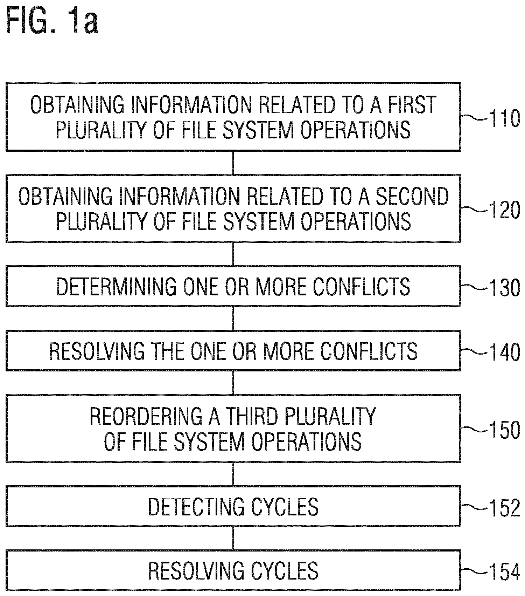

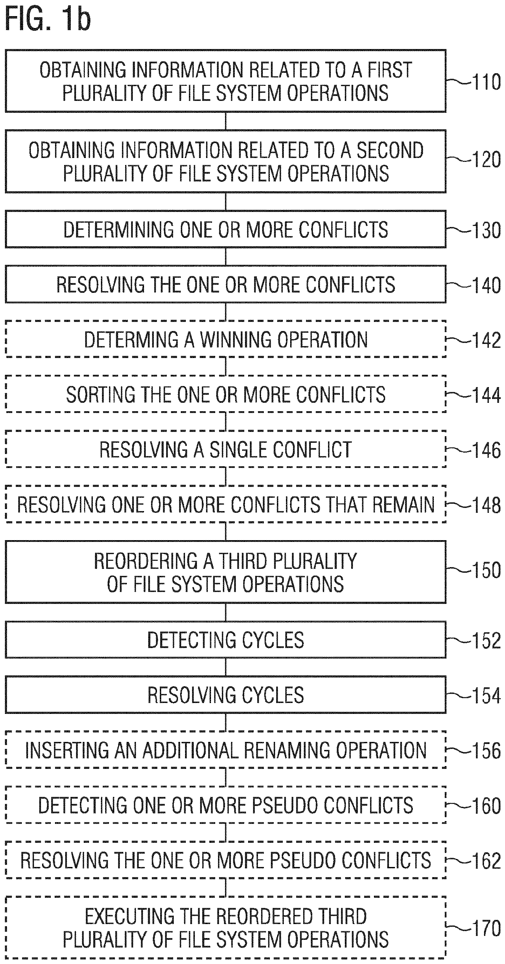

Figs. 1a and 1b show flow charts of embodiments of a method (i.e. a computer-implemented method) for synchronizing data between a first repository and a second repository. The first repository and second repository are based on an identifier-based file system that supports move operations. The method comprises obtaining 110 information related to a first plurality of file system operations that account for changes of a current state of the first repository vis-à-vis a previous state of the first repository. The method comprises obtaining 120 information related to a second plurality of file system operations that account for changes of a current state of the second repository vis-à-vis a previous state of the second repository. The method comprises determining 130 one or more conflicts between file system operations of the first plurality of file system operations and of the second plurality of file system operations. The method comprises resolving 140 the one or more conflicts to obtain a third plurality of file system operations comprising conflict-resolved versions of the first and second plurality of file system operations. The method comprises reordering 150 the third plurality of file system operations based on operation order dependencies between the file system operations of the third plurality of file system operations. The reordering of the third plurality of file system operations comprises detecting 152 of cycles in the reordering of the third plurality of file system operations, and resolving 154 the detected cycles.

Embodiments relate to a method, apparatus and computer program for synchronizing data between a first repository and a second repository. The first repository and the second repository may be instances (i.e. copies) of a shared folder (i.e. of the same shared folder). In this context, a "shared folder" is a folder that is used by multiple devices, but not necessarily multiple users. For example, the first repository may correspond to a local copy of the shared folder, while the second repository may correspond to a remote copy of the shared folder, e.g. a server copy of the shared folder or a copy of the shared folder stored on another computer (or vice versa). In an ideal setting, once changes are applied to the local folder (or to the remote folder), they are (immediately) synchronized to the remote folder (or the local folder). Unfortunately, this may not be feasible, as the local folder may be stored on a mobile device, such as a smartphone or a laptop computer, which might not be able to access the server comprising the remote folder all the time. At the same time, the second repository might also synchronize to a third repository, and changes that occur in the third repository might also synchronize to the second repository. Therefore, at a current time, both the first repository and the second repository may be changed compared to the previous states of the first and second repositories. Furthermore, often a detailed log of operations that have been performed on the repositories are not available, i.e. what is known is merely the previous state (i.e. a state the first/second repository at a time of a previous synchronization between the first and second repositories) and the current state of the repositories. In between the previous state and the current state, (different) file system operations may have been applied to the first and second repositories. In consequence, the previous state of the first repository and the previous state of the second repository may be equal (or equal except few exceptions), and the current state of the first repository may diverge from the current state of the second repository.

To be able to determine which file system operations have been applied on the respective repositories, the first repository and second repository are based on an identifier-based file system. In an identifier-based file system, each file and folder has a unique identifier that is retained (even if the file/folder is renamed, moved or changed). Based on the unique identifier, each file/folder can be tracked between the previous and the current version of the respective repository. For example, if a file is moved, changed and renamed, it still carries the same unique identifier, which can be found in the other repository. Based on these identifiers, a tracking of files that have been moved is enabled. The identifier-based file system further supports move operations, so that a file or folder retains its identifier (even) if it is moved.

The method comprises obtaining 110 (i.e. calculating, determining or receiving) the information related to the first plurality of file system operations that account for changes of the current state of the first repository vis-à-vis (i.e. opposite or versus) the previous state of the first repository and obtaining 120 (i.e. calculating, determining or receiving) the information related to the second plurality of file system operations that account for changes of the current state of the second repository vis-à-vis (i.e. opposite or versus) the previous state of the second repository. In embodiments, the information related to the first plurality of file system operations and the information related to the first plurality of file system operations may be obtained, e.g. calculated or determined, by the same computer or by different computers. For example, both the information related to the first plurality of file system operations and the information related to the first plurality of file system operations may be determined/calculated by the same computer, e.g. a computer executing the method. Alternatively, the information related to the first plurality of file system operations may be determined/calculated by the computer executing the method (i.e. a computer hosting the first repository), and the information related to the second plurality of file system operations may be determined/calculated by a computer hosting the second repository, and received by the computer executing the method (or vice versa). In embodiments, the term computer is not limited to personal computers, but may also comprise mobile phones, wearable devices, mobile devices, smartphones, servers, virtual servers, Internet of Things devices etc.

The determining/calculating of the information related to the first/second plurality of file system operations may comprise comparing the current state of the respective repository to the previous state of the respective repository. For example, the first and second repository may each comprise a plurality of files and folders of the shared folder, and a data structure that represents information on the previous state of the respective repository). For example, the data structure may comprise information on a previous content of files (i.e. as hash values) and/or of previous locations of files and/or folders in the previous state of the respective repository. By comparing the current state of the respective repository with the previous state of the respective repository, the first or second plurality of file system operations may be calculated that may have conceivably led to the current state of the respective repository when starting from the previous repository. Therefore, the first or second plurality of file system operations may be or comprise the file system operations that have actually led to the current state of the respective repository, albeit additional file system operations may have happened that are not shown in the first/second plurality of file system operations, e.g. if files/folders were moved twice, if files were edited and subsequently deleted, or if file system operations were undone (so-called operation consolidation). To track the files/folders, the unique identifiers of the files/folders of the first and second repository are used. For example, if a file is moved or renamed, its unique identifier remains the same, so a move/rename file system operation may be easily tracked.

The method comprises determining 130 one or more conflicts between file system operations of the first plurality of file system operations and of the second plurality of file system operations. For example, each of the one or more conflicts may occur between a first file system operation of the first plurality of file system operations and a second file system operation of the second plurality of file system operations. Each file system operation may have one or more preconditions that are to be met so the file system operation can be executed. For example, to delete a file from a folder, the folder has to be the ancestor of the file and the file has to be a file. To move a folder, both the source and destination folder have to exist and the folder to be moved cannot be an ancestor of the destination folder. The first file system operation and the second file system operation may be conflicting if a precondition of the first file system operation is not met after executing the second file system operation (and vice versa). In other words, the first file system operation is conflicting with the second file system operation, if, after executing the second file system operation, the first file system operation cannot be executed anymore (and vice versa). To determine 130 the one or more conflicts, the method may comprise determining for each file system operation of the first plurality of file system operations whether the preconditions of the file system operations are still met after executing each of the file system operations of the second plurality of file system operations (and vice versa).

In some embodiments, not only "real" conflicts may be determined (i.e. operations that conflict syntactically and in effect), but also pseudo-conflicts. Pseudo-conflicts occur between operations that conflict syntactically while having the same effect. For example, if the same file is deleted in the first repository and in the second repository, the operations are conflicting (as the file cannot be deleted twice), but the effect is the same, leading to a pseudo-conflict.

Consequently, the method may further comprise detecting 160 one or more pseudo-conflicts between file system operations of the first plurality of file system operations and of the second plurality of file system operations. The method may further comprise resolving 162 the one or more pseudo-conflicts by modifying the previous states of the first repository or of the second repository based on detected pseudo-conflicts, e.g. by pretending one of the pseudo-conflicting file system operations hadn't happened.

The method further comprises resolving 140 the one or more conflicts to obtain a third plurality of file system operations comprising conflict-resolved versions of the first and second plurality of file system operations. The one or more conflicts are resolved by selecting a winning operation (that shall remain unchanged) and a losing operation (that shall be changed to remove the conflict). In other words, the resolving 140 of the one or more conflicts comprises determining 142 a winning operation and a losing operation among the first and second file system operation based on a selection criterion. The winning operation remains unchanged, and the losing operation is changed in the resolving 140 of the one or more conflicts. In some cases, a simple change may suffice to resolve the conflict. In some cases, the losing operation may be changed by undoing the losing operation (if possible). For example, the resolving of the one or more conflicts comprises changing the losing operation. To determine the winning operation and the losing operation, the selection criterion is used. Different selection criteria may be used: In some, the one operation may be selected as losing operation that has less impact on other operations (or more impact on other operations), e.g. to reduce an effort required for changing the losing operation. In some other cases, the one operation may be selected as winning operation that has taken the user more effort, e.g. to avoid requiring the user to repeat the effort. Alternatively, the location (e.g. personal computer vs. server, first repository vs. second repository) or the user account that has performed the changes (in case of a multi-user shared folder, e.g. to select the department leader as contributing the winning operation and the subordinate as contributing the losing operation. In other words, the selection criterion may be based on one of an estimated effort of a user for performing the respective operations, a logical location of the repositories the respective operations were performed on, and a user group of a user that has performed the respective operations.

In at least some embodiments, the conflicts may be resolved in an iterative manner, i.e. one after another, e.g. to benefit of situations in which resolving one conflict results in other conflicts disappearing. To decide which conflicts are to be resolved first, the one or more conflicts may be sorted first. For example, the one or more conflicts may be sorted based on their type, i.e. the one or more conflicts may be sorted based on a conflict type of the one or more conflicts (e.g. create-create conflicts before create-move conflicts etc.). A more detailed list of possible conflict types is offered in the context of a detailed embodiment below. The sorted conflicts may be resolved one-by-one, e.g. the first conflict may be resolved, the one or more conflicts that remain may be re-determined (as some conflicts may disappear after solving the first conflict), sorted, and the next "first" conflict may be resolved, until all of the conflicts are resolved. In other words, the resolving 140 of the one or more conflicts may comprise sorting 144 the one or more conflicts based on a conflict sorting rule to identify a single conflict to be resolved, (subsequently) resolving 146 the single identified conflict, and (subsequently) resolving 148 the one or more conflicts that remain after the single identified conflict has been resolved. The one or more conflicts that remain after the single identified conflict has been resolved may be resolved by repeating the process, i.e. by repeating the determining 130 of the one or more conflicts and the resolving 140 of the one or more conflicts. In other words, the determining 130 of the one or more conflicts and the resolving 140 of the one or more conflicts may be repeated after re-solving the single identified conflict. Exemplary approaches for resolving the different conflict types are illustrated in connection with the specific embodiment below. They may also be used and/or adapted to be used in a more general manner.

The method comprises reordering 150 the third plurality of file system operations based on the operation order dependencies between the file system operations of the third plurality of file system operations. Operation order dependencies define the logical order of file system operations: If, for example, a create operation is used to create a folder, and a move operation is used to move a file into the newly created file or folder, the move operation depends on the create operation, such that the create operation has to occur before the move operation. In other words, the operation order dependencies define a logical order that the file system operations of the third plurality of system operations have to adhere to so the preconditions of (all of) the file system operations are met. In embodiments, these operation order dependencies may be based on a ruleset of operation order dependencies. The ruleset of operation order dependencies may define operations that logically have to occur in a specific order (such as e.g. create before move if a file is to be moved into the newly created folder). In other words, the ruleset of order dependencies may comprise one or more order operation order dependencies that each define a logical order between a first file system operation and a second file system operation. There are different types of operation order dependencies: For example, there are operation order dependencies where the first file system operation makes a file name available so the file name can be used by the second file system operation, such as an operation order dependency (denoted 1 in the more specific embodiment described in a later part of the present disclosure) in which a file or folder is deleted before another file or folder is moved to occupy the file name previously used by the deleted file or folder, or an operation order dependency (denoted 2) in which a file or folder is moved before another file or folder is created to occupy the file name previously used by the moved file or folder, or an operation order dependency (denoted 5) in which a file or folder is deleted before another file or folder is created to occupy the file name previously used by the deleted file or folder, or an operation order dependency (denoted 6) in which a file or folder is moved before another file or folder is moved to occupy the file name previously used by the previously moved file or folder. In other words, the one or more operation order dependencies comprise at least a (first) file system operation order dependency between the first file system operation and the second file system operation where the first file system operation makes a file name available so the file name can be used by the second file system operation. Each cycle that occurs between the third plurality of file system operations includes one of these operation order dependencies, which can be mitigated to remove the cycle. Additionally, the one or more operation order dependencies may comprise a (second) file system operation order dependency between the first file system operation and the second file system operation where the file system operation results in a file or folder being present so that the file or folder can be used by the second file system operation. For example, the one or more operation order dependencies may comprise an operation order dependency (denoted 4) in which a folder is created before a file is moved into the folder, or an operation order dependency (denoted 7) in which a folder is created before a file or another folder is created within the previously created folder. Additionally or alternatively, the one or more operation order dependencies may further comprise an operation order dependency (denoted 3) where the first file system operation moves a file or folder outside a folder that is deleted by the second file system operation, and/or the one or more operation order dependencies further comprises an operation order dependency (denoted 8) where a combination of the first file system operation order and the second file system operation order result in a first directory and a second directory having flipped their parent-child relationship.

The reordering of the third plurality of file system operations comprises the detecting 152 of the cycles in the reordering of the third plurality of file system operations, and the resolving 154 the detected cycles. Each cycle comprises two or more operations of the third plurality of file system operations, e.g. a file system operation a), a file system operation b), and zero or more additional file system operations that logically occur between a) and b), such that a) at least transitively depends on b) (so its preconditions are met) and b) at least transitively depends on a) (so its preconditions are met). The transitive dependency may be caused by the zero or more additional file system operations that logically occur between a) and b)). The cycles are based on the one or more operation order dependencies, e.g. such that each cycle is based on an operation order dependency where the first file system operation makes a file name available so the file name can be used by the second file system operation. In other words, the two or more operations comprise a first file system operation that makes a file name available so the file name can be used by a second file system operation (e.g. by deleting or moving a file/folder. The resolving 154 of the respective cycle may comprise inserting 156 an additional renaming operation to make the file name available. For example, a file or folder previously occupying the file name may be renamed/moved to now comprise an additional suffix (e.g. before the file extension), e.g. so a user of the computer system can deal with the conflict while avoiding a loss of data.

To be able to resolve the cycles among the third plurality of file system operations, they are detected first. This can be done by first collecting (all of) the operations that have operation order dependencies with other operations of the third plurality of file system operations. In other words, the method may comprise determining (all of) the operations of the third plurality of file system operations that have operation order dependencies with other operations of the third plurality of file system operations. If pair-wise swapping is used in the reordering of the third plurality of file system operations, (all of) the operations can be determined that are involved in a swap. In other words, the operations of the third plurality of file system operations may be swapped in a pair-wise manner in the reordering 150 of the third plurality of file system operations based on the operation order dependencies. The operations that are swapped in the reordering 150 of the third plurality of file system operations may form a subset of operations of the third plurality of file system operations. Operations of the subset of operations of the third plurality of file system operations are candidates for the detecting of the cycles. The cycles may be detected in the reordering of the third plurality of file system operations by attempting to form cycles among the subset of operations of the third plurality of file system operations. For example, each operation of the subset may be combined with each other operation (or each other combination of operations) of the subset to determine whether a cyclic dependency is present. If a cyclic dependency is present, a cycle is formed by the operations of the subset that are involved in the cyclic dependency.

After reordering the third plurality of file system operations and resolving the cycles, the third plurality of file system operations may be executed on the respective repositories to synchronize the two repositories. In other words, the method may comprise executing 170 the reordered third plurality of file system operations to synchronize the first repository and the second repository. For example, the method may comprise executing 170 (all of) the reordered third plurality of file system operations on both of the previous versions of the respective repositories to synchronize the first repository and the second repository. Alternatively, a repository-specific subset of the reordered third plurality of file system operations may be executed on each of the repositories, excluding the file system operations that have previously been applied to the respective repositories.

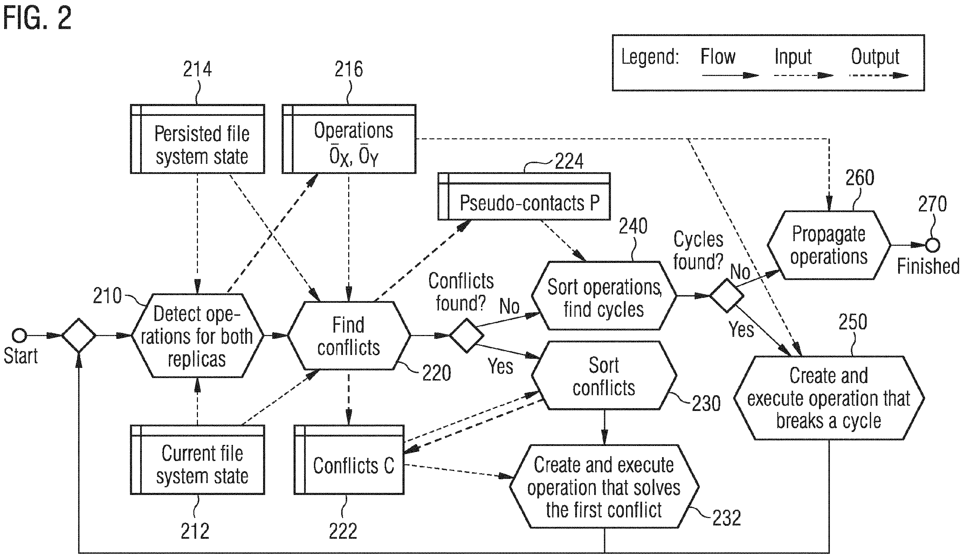

More details and aspects of the method and the computer program are mentioned in connection with the proposed concept or one or more examples described above or below (e.g. Fig. 2 to 5). The method or computer program may comprise one or more additional optional features corresponding to one or more aspects of the proposed concept or one or more examples described above or below.

Embodiment provide a method and apparatus for file synchronization. They may relate to a consistency of optimistic replication systems. File synchronizers may be considered a concrete instance of a distributed system with optimistic replication. Replication means that data is replicated (i.e., copied), fully or in part, between storage devices that store them. Replication offers several advantages, such as improved availability, performance in terms of lower latency (users can work on nearby replicas) and increased throughput. Optimistic replication systems may assume that conflicts happen rarely in practice - and if they do, they can be solved after the fact. They allow users to work on replicas in isolation, merging updates in the background. According to Yasushi Saito and Marc Shapiro in "Optimistic replication", the latter, merging updates is referred to as achieving consistency, which is the property that the state of replicas stay close together. Many definitions of consistency exist. The described category of file synchronizers employ eventual consistency, where the only guarantee is that all replicas will eventually converge to the same state, given that no new write operations are generated at any replica.

In the present disclosure, the file system (e.g. the file system of the first repository and of the second repository) may be formally designed, so that it can be used by the exemplary implementation of the proposed algorithm. The file system model is ID-based (identifier-based) and supports the move operation, because most file systems support such IDs and the move operation, and because move operations allow for efficient reorganization of objects (while IDs facilitate the detection of moves in state-based update detection approach).

For example, the file system F may be used in embodiments. The file system F may be defined to comprise (or be) a set of tuples where each tuple represents an object with a unique ID $i \in I$, parent directory ID $p \in I$, type $t \in T$ (with $T = \{file, dir\}$), name $n \in \Sigma^+$ (with $\Sigma^+ = \Sigma^* \setminus \{e\}$, i.e., all possible characters except the empty word), lastmodified meta-datum $l \in L$ and content $b \in B$. A directory is abbreviated as dir. $I$ is the set of unique IDs, $L$ is the set of all valid lastmodified meta-datum values (e.g. $\mathbb{N}$), and $B$ is the set of arbitrary byte sequences, including $\varepsilon$. That is, $F \subset I \times I \times T \times \Sigma^+ \times L \times B$, with tuples $(i_k, p_k, t_k, n_k, l_k, b_k)$ where $b_k = \varepsilon \Leftrightarrow t_k = dir$ holds. A number of invariants (laws) hold for F:

$$\forall i,j \in I : i \in list(j) \Rightarrow type(j) = dir \qquad (1)$$

$$\forall i \in I : i \notin list(i) \qquad (2)$$

$$\forall i,j,k \in I : j \neq k \wedge i \in list(j) \Rightarrow i \notin list(k) \qquad (3)$$

$$\forall i \in I : i_{root} \notin list(i) \qquad (4)$$

$$\forall i \in I \setminus \{i_{root}\} : type(i) \neq error \Longleftrightarrow ancestor(i_{root}, i) \qquad (5)$$

$$\forall i,j,k \in I : j \neq k \wedge j \in list(i) \wedge k \in list(i) \Rightarrow name(j) \neq name(k) \qquad (6)$$

where $list(i)$ returns the set of IDs of all tuples whose $p_k = i$ (i.e., the set of immediate child IDs of $i$); $type(i)$ returns $t_k$ of the tuple where $i_k = i$, or $error$ if no such tuple exists; $name(i)$ returns $n_k$ of the tuple where $i_k = i$. It is additionally defined the predicate

$$ancestor(i,j) = \begin{cases} true \ if \ j \ \in \ list(i) \\ true \ if \ \exists k \ \in \ list(i) : ancestor(k,j) \\ false \ otherwise \end{cases}$$

to express whether the object with ID $i$ is an ancestor of the object with ID $j$. F is an arborescence rooted in the well-known object $i_{root} \in I$ with $type(i_{root}) = dir$, where each object exists exactly once, as child of one specific parent object. An object may be of type file or directory.

Only directory objects can have child objects. Every object must be reachable, and no two sibling nodes may have the same name.

It should be noted that the notation of propositional calculus is used, e.g. the symbol $\exists k \in K: C$ means that there exists an element k (of a set K) that fulfills certain conditions C, $\forall k \in K: C$ means that all of the members k of the set K fulfill a condition, $\Lambda$ is the AND-operator, V is the OR-operator and $A \Rightarrow B$ means that A implies B.

The file system operations with their pre- and postconditions may be defined in the subsequent table. Function $id(i,n)$ returns the ID of the object with parent $i$ and name $n$, or $error$ if no such object exists. $lastmodified(i)$ returns $l_k$ of the tuple where $i_k = i$, or $error$ if no such tuple exists.

| Operation | Description, pre- and post-conditions |
|---|---|
| $createdir(i,p, n)$ | Creates new dir (i.e. directory) with ID $i$ and name $n$ in parent dir with ID $p$.<br>Precondition:<br>$\neg ancestor(i_{root}, i) \wedge (ancestor(i_{root},p) \vee p = i_{root}) \wedge type(p) = dir \wedge id(p,n) = error$<br>Postcondition:<br>$i \in list(p) \wedge type(i) = dir \wedge lastmodified(i) \neq error$ |
| $createfile(i,p,n)$ | Creates new file with ID $i$ and name $n$ in parent dir with ID $p$.<br>Precondition:<br>see $createdir(i,p,n)$<br>Postcondition:<br>$i \in list(p) \wedge type(i) = file \wedge lastmodified(i) \neq error$ |
| $move(i,u,v,n)$ | Moves a file or dir node with ID $i$ from parent dir with ID $u$ to parent dir with ID $v$, and/or change the object's name to $n$.<br>Precondition:<br>$type(u) = dir \wedge i \in list(u) \wedge type(v) = dir$<br>$\wedge id(v,n) = error \wedge \neg ancestor(i,v)$<br>Postcondition:<br>$i \in list(v) \wedge i \notin list(u)$<br>Note: $\neg ancestor(i,v)$ ensures that the user cannot move a dir to a destination dir below it. |
| $deletefile(i,p)$ | Removes the file with ID $i$ from parent dir with ID $p$. Precondition:<br>$ancestor(i_{root},i) \wedge type(i) = file$<br>Postcondition:<br>$i \notin list(p) \wedge \neg ancestor(i_{root},i) \wedge lastmodified(i) = error$ |
| $deletedir(i,p)$ | Removes the empty dir with ID $i$ from parent dir with ID $p$.<br>Precondition:<br>$ancestor(i_{root},i) \wedge type(i) = dir \wedge list(i) = \{\}$<br>Postcondition:<br>see $deletefile(i,p)$ |
| $edit(i,op)$ | Changes the byte content of file with ID $i$ by performing the operation $op$ (e.g. adding, removing or changing bytes at specific positions within the file).<br>Precondition:<br>$ancestor(i_{root},i) \wedge type(i) = file$. Let $l_{pre} = lastmodified(i)$<br>Postcondition:<br>$ancestor(i_{root},i) \wedge lastmodified(i) \neq l_{pre}$ |

In Mahsa Najafzadeh: The Analysis and Co-design of Weakly-Consistent Applications, section 8.5, an equivalent formal definition is presented, which the respective authors proved to be correct using the CISE theorem prover.

Embodiments may use a state-based update detection (e.g. to determine the information related to the first plurality of file system operations and the information related to the second plurality of file system operation). Update detection often is the first step done by a state-based file synchronizer to synchronize two replica. The goal of state-based update detection is to detect how users updated the replica (i.e. the current state of the respective repository), by determining the file system operations (e.g. the first/second plurality of file system operations). As, usually, no complete log of operations is available, operations are detected/computed by a pairwise difference between the (a) the current state (of the first repository) and the persisted state (e.g. the previous state of the first repository) of the local replica, and (b) the current and the persisted state of the remote replica (e.g. the current and previous state of the second repository).

Embodiments may be based on an operation detection procedure. Detecting operations from computing the difference of two states is a well-known concept. Since F uses IDs, an algorithm similar to the one proposed in Q. Li, L. Zhu, S. Zeng, and W. Q. Shang: "An Improved File System Synchronous Algorithm" may be used. However, contrary to that disclosure, in F, rename and move operations might not be differentiated.

The detected operations depend on the data model and there might be slight differences between the detected operations and those defined in the file system model. For F it may be detected:

- createdir(i, p, n): a directory was created, when $i$ with $type(i) = dir$ is found in the current state, but not in the persisted one
- createfile'(i, p, n, c): a file with content c was created, when $i$ with $type(i) = file$ is found in the current state, but not in the persisted one - it may be noted that create file and createfile' have different definitions!
- move(i,u,v,n): an object was moved, when $i$ is found in both states, but with varying name or parent
- edit'(i): a file's content was edited, when $i$ is found in both states, but with different lastmodified meta-datum $l$. For update-detection, the exact content, i.e., how the file changed, is not relevant yet ($edit' \neq edit$)
- delete'(i,p): an object was deleted when $i$ is found in the persisted state, but not in the current one. $delete'$ may be a recursive operation when it affects a directory. It may aggregate all other detected $deletefile(j,q)$ and $deletedir(j,q)$ operations that affect objects $j$ situated below $i$, i.e., where $ancestor(i,j)$ holds. When the synchronizer applies $delete'(i,p)$ to the other replica in the propagation stage, it may apply the corresponding $deletefile$ and $deletedir$ operations according to a post-order traversal of the file system arborescence.

It may be noted that edited directories whose lastmodified meta-datum changed may be ignored, because users don't actually edit directories, just files. The creation, moving or deletion of a directory's children are already explicitly represented as operations - thus their implicit effect may be ignored, which is the modification of the parent directory's lastmodified meta-datum.

Embodiments may further handle side-effects of operation detection. For F, the computed list of operations may suffer from two side effects:

1. The detected operation list might not indicate the exact order of operations. Exemplary, if the user deletes file /x and moves /y to /x, then the delete file operation may be applied before the move operation, because the opposite order would violate the preconditions of the move operation. This problem exists for almost every state-based synchronizer (not just those with a model such as F)

2. Operations are affected by consolidation: for F the following seven consolidation rules may be found by examining all operation pairs (with $create = createfile \lor createdir$, $delete = deletefile \lor deletedir$):

(a)

$$move(i,u,v_1,n_1) + move(i,v_1,v_2,n_2) \cong move(i,u,v_2,n_2)$$

(b)

$$createfile(i,p,n) + edit(i,op) \cong createfile'(i,p,n,c)$$

(c)

$$create(i,p,n_1) + move(i,p,v,n_2) \cong create(i,v,n_2)$$

(d)

$$edit(i,op_1) + edit(i,op_2) \cong edit'(i)$$

(e)

$$create(i,p,n) + delete(i,p) \cong [\,]$$

(f)

$$edit(i,op) + deletefile(i,p) \cong deletefile(i,p)$$

(g)

$$move(i,u,v,n) + delete(i,v) \cong delete'(i,u)$$

3. Cycles from missing move operations: because one of operation consolidation rules such as (a) there can be cycles in the detected operations. Consider an example with two files $p,q$, where for p we have $(i_p = 1, p_p = i_{root}, t_p = dir, n_p = 'a', l_p=1, b_p = \varepsilon)$ and for q we have $(i_q = 2, p_q = i_{root}, t_q = dir, n_q = 'b', l_q=1, b_q = \varepsilon)$ and the user swaps their names. This can only be done by performing three move operations, e.g. $move(1, i_{root}, i_{root}, 'temp')$, $move(2, i_{root}, i_{root}, 'a')$, $move(1, i_{root}, i_{root}, 'b')$. The detection algorithm might detect only two move operations, $move(1, i_{root}, i_{root}, 'b')$, $move(2, i_{root}, i_{root}, 'a')$, because of the operation consolidation. Synchronizing these operations is not straightforward, because the first one has to precede the second one, while the second one also has to precede the first one.

Norman Ramsey and Elod Csirmaz: "An algebraic approach to file synchronization" and Elod Csirmaz: "Algebraic File Synchronization: Adequacy and Completeness" identified the first two side-effects for file systems without move operation support. The present disclosure may be the first to discover and solve the third side-effect (cycles). Existing file synchronizers (academic or industrial) avoid the third side-effect either by (1) using a simplified file system model without move support, or (2) use an ID-based model (with move operation support) but solve the side-effect using a different approach.

In the seminal work S. Balasubramaniam and Benjamin C. Pierce: "What is a File Synchronizer?", the authors describe and coin the term file synchronizer. Their paper describes a file synchronizer as a program that performs a pair-wise synchronization of two file system replicas upon the user's request, breaking synchronization down to a 3-stage process. In the first stage, update detection, the local and remote replicas are scanned to detect their current state. The list of changes (updates) is computed by comparing the current state to a locally persisted state from the point of the last synchronization. The second stage, reconciliation, is given the updates of both replicas and simulates how the final, reconciled file system should look like, such that it contains the updates of both replicas. The updates are examined for conflicts for which the user is asked to choose a suitable resolution. The output of this stage is the list of operations for the user to review in a graphical interface. The final stage, propagation, performs the actual file system modifications on each replica and updates the locally persisted state.

A comparison of that disclosure with others shows that file synchronizer developers take the liberty of defining their own file system model for internal processing. One important categorization is whether the file system model is ID- and path-based. Path-based models are easier to implement than ID-based ones, but are inferior in performance and in the ability to detect all operations unambiguously. None of the previously known work discusses the previously noted side-effects, nor do they deal with them. In practice, previous implementations cannot possibly work when encountering such situations.

The majority of industrial synchronizers deployed in practice today (Dropbox, OneDrive, Google Backup and Sync, ...) are set to automatically synchronize changes in near-real-time mode, which includes the automatic resolution of conflicts. Automatic resolution is beneficial for the user because it saves time and effort in case the resolution was appropriate. However, in case the resolution was inappropriate, the amount of saved effort may not be outweighed by the costs incurred for subsequent, manual repair.

Embodiments may deal with conflicts and their resolution. Conflicts are combinations of operations that are discovered to be incompatible with each other by the file synchronizer during synchronization, even though they were successfully applied to each replica in isolation. On a technical level an operation $o_X$ undetected in replica $X$ (e.g. the first repository) is conflicting with operation $o_Y$ detected in replica $Y$ (e.g. the second repository, and thus cannot be applied to $Y$ by the synchronizer) if the preconditions of $o_X$ no longer hold for $Y$'s state because of the modifications already applied to $Y$ by $o_Y$. A typical example is when the content of a file is updated in replica $X$ while that file is deleted in replica $Y$.

Related academic file synchronizer may (as well as industrial file synchronizers) have several shortcomings in the area of conflict resolution:

- Many works do not perform a thorough analysis of the file system model and the preconditions of the operations. As a consequence, some conflicts are missed For example, all conflicts might be ignored except for Edit-Edit conflicts (where a file was modified/edited in two different replicas).
- Works might only provide one, hard-coded resolution approach for each conflict. This is inflexible, because the right resolution may depend on the context.
- The hard-coded approach may not be optimal, requiring additional work for the user to repair the file system after the automatic resolution was applied by the synchronizer. Examples include:

  Recursive merging of a directory in case the users of each replica created a directory with the same name under the same parent. Not only might the recursive merge not be the intention of the user, but unmerging the merged directories may require extensive amounts of work.
  When two objects which were moved to (or created at) the same location of both replicas, a file synchronizer may choose to rename both objects instead of just one, which does not keep the intention of either user.

In the following, the generic approach of at least some embodiments is introduced, followed by a concrete example by applying it to the concrete file system model F.

In the following, the generic approach is introduced, independent of a concrete data model, such as F. It comprises or consists of two phases. The preparation phase is done offline before implementing the software, whereas the execution phase applies the findings of the preparation phase, online at run-time of the synchronizer.

In the preparation phase, an understanding of the problems that can occur during synchronization may be gathered by building and closely examining the file system model. An analysis of the operation preconditions may reveal two classes of issues: first, two concurrent operations (each applied to a different replica) can cause conflicts that a synchronizer may handle. Second, state-based update detection might not detect the actual operations (and their order) applied by the user, but only an equivalent, unordered set (e.g. the first and second plurality of file system operations). A precondition analysis may extract order dependencies (and even identify cycles), otherwise the synchronization of operations may fail. The following sections describe the individual steps according to an embodiment.

Step 1: File system model formalization: The first step may be to formally define the file system model the synchronizer uses internally, that comprises a formal definition of its elements, invariants and operations (with their pre- and postconditions). An automated approach is recommended, where a model (initially built by hand) is iteratively refined via model checking tools, until all invariants and operations are known and free of contradictions. See Mahsa Najafzadeh: "The Analysis and Co-design of Weakly-Consistent Applications" for an example, who did this for a model equivalent to the F model.

Step 2: Analysis of conflicting operations: An operation $o_X$ (of the first plurality of file system operations) detected in replica $X$ is conflicting with operation $o_Y$ (of the second plurality of file system operations) detected in replica $Y$ (and thus cannot be applied to $Y$ by the synchronizer) if the preconditions of $o_X$ no longer hold for new state of $Y$ due to the modifications already applied to $Y$ by $o_Y$.

To find conflicts (e.g. to determine the one or more conflicts), let $OT$ be the list of all operation types of the model found in step 1. An initially equal state for replicas $X$ (e.g. the first repository) and $Y$ (e.g. the second repository) may be the starting point. For any two types $t_A$, $t_B$ from $OT$, operations $o_X$ (of type $t_A$ and of the first plurality of file system operations) and $o_Y$ (of type $t_B$ and of the second plurality of file system operations) may be instantiated, $o_X$ may be applied to $X$ (which yields $X'$) and $o_Y$ may be applied to $Y$ (yields $Y'$). The operation parameters (e.g. $i,p,u,v,n$ for F) may be chosen such that either applying $o_Y$ to $X'$, or $o_X$ to $Y'$ fails, due to violated preconditions.

Finding conflicts can be done manually or in an automated approach. The manual, pragmatic approach may examine each individual precondition of each operation type $t_A$ and finds a $t_B$, $o_Y$ and $o_X$ that produces a conflict. It is recommended to identify pseudo conflicts, where two operations do conflict syntactically, but should not, because both operations have the same effect. In this case, the synchronizer might not need to change the replicas, because the effect of both operations is the same anyway. An example for a pseudo-conflict is if $o_X,o_Y$ both are a deletefile(i,p) operation that affects the same object $i$.

Step 3: Resolving conflicts: The general rule of conflict resolution may be that the effect of operations $o_X$ and $o_Y$ are preserved as much as possible. There are two general approaches to conflict resolution:

1. Choose one of the operations to win, and manipulate the loser operation to resolve the conflict, or
2. Let both operations lose, by manipulating both of them, which avoids having to choose a winner.

Embodiments may use option 1. Even though it is challenging to decide which of the two operations should take precedence in case of automatic resolution (this is not a problem if the conflict resolution is delegated to the user), the advantage is that at least one operation is fully preserved, and only the user who executed the loser operation may be informed. The general approach for resolving conflicts may be to perform the simplest possible resolution step, focusing on manipulating the loser operation instead of the winner operation. Sometimes the loser operation only has to be changed slightly, in other cases it has to be undone completely. Consider an example where $o_X$ oxdeletes a directory which was renamed by $o_Y$, and the strategy is to prefer delete over move operations. Instead of executing $o_X$ in replica $Y$, which could cause side effects because the directory may have child-objects that are involved in other conflicts, it is more appropriate to undo $o_Y$. The winner operation $o_X$ remains and is eventually executed, once all other conflicts have been resolved.

If conflict resolution is automatic, it may be ensured that if the preconfigured resolution was inappropriate for the user, the costs of subsequent, manual repair of the file system is manageable. Optimally, automatic resolutions may be changed by the user by a simple click, either before (via configuration) or after the fact.

In this step the synchronizer developer may examine each conflict found in step 2 and determine suitable resolution options. The operation(s) the synchronizer generates to resolve a conflict may be designed such that their execution cannot fail (due to violated preconditions), even if other conflicts exist.

Step 4: Analysis of operation order dependencies (e.g. between the third plurality of file system operations, for reordering the third plurality of file system operations): Assume that a file synchronizer has resolved conflicting operations between $X$ and $Y$, such that the update detection now results in one set of unordered operations per replica $\overline{O}_X$, $\overline{O}_Y$. To be able to propagate the operations in $\overline{O}_X$, $\overline{O}_Y$, a suitable order may be found, which requires an analysis of the operation preconditions because not all operations are commutative. Let $OT$ be the list of considered operation types. For any two types $t_A$, $t_B$ from $OT$ the respective operations $o_A, o_B$ may be instantiated, as they would have been detected on one specific replica, e.g. $X$. The parameters (e.g. $i, p, u, v, n$ for F) may be chosen such that applying the sequence $(o_A, o_B)$ to the other, unchanged replica is feasible, but applying $(o_B, o_A)$ would fail, because a precondition of one of the two operations is violated. Exemplary, when creating a directory and a file inside it, the order cannot be flipped. That is, $(o_A, o_B)$ is feasible for $o_A$ = createdir(1, $i_{root}$, 'dir') and $o_B$ = createfile(2, 1,'file'), but $(o_B, o_A)$ would fail, because precondition type(1) = dir of $o_B$ would be violated. The result may be a list of order dependencies, where each order dependency contains $t_A, t_B$ (in a specific order) and the violated operation precondition(s). Finally, it may be examined whether cycles can be built from the order dependencies.

Phase 2: Execution. Fig. 2 shows a schematic diagram of a synchronization algorithm. In Fig. 2, solid lines denote the flow of the algorithm, while small dashes denote inputs and large dashes denote outputs. Computational steps are shown in hexagons, data structures in table-shaped rectangles. The Current file system state is provided (and regularly updated) by the update detection component of the synchronizer (not shown). The algorithm is iterative. Let $\overline{O}_X$, $\overline{O}_Y$ be the detected operations 216. The algorithm starts with step Detect Operations for Both Replicas 210. In this step, the current file system state 212 and the persisted file system state are used to detect the operations 216. The subsequent step Find Conflicts 220 analyzes every operation pair of $\overline{O}_X$, $\overline{O}_Y$ and generates (1) a list of conflicts $C$ 222 where each $c \in C$ is a tuple of two conflicting operations, and (2) a list of pseudo-conflicts $P$ 224, where each $p \in P$ summarizes two pseudo-conflicting operations.

If $C \neq \emptyset$, $C$ is sorted 230 according to some preference (e.g. "resolve conflict type $t_1$ before type $t_2$"), if desired. Then a resolution operation is generated 232 (according to the configured strategy) and executed that only resolves the first $c \in C$.

If $C = \emptyset$ then operations are sorted 240 according to algorithm 1.

---

Algorithm 1: Operation sorting algorithm

---

```
def  sort_operations (Ox, Oy, P) -> L:

        global has_order_changed = False

        operations = [P + Ox\P + Oy\P]

        complete_cycles = [ ]

        reorderings = [ ]

        while True:

          has_order_changed = False

          find_and_fix_order_violations (operations)

          if not has_order_changed :

            break

          complete_cycles = find_complete_cycles (reorderings)

          if len (complete_cycles) > 0:

            break

        if len (complete_cycles) > 0:

          resolution_operation = break_cycle (complete_cycles [0])

          return [resolution_operation]

        else:
```

---

```
        return operations
```

---

In this algorithm operations are built as an initially unsorted list of pseudo-conflicting operations $P$ and non-conflicting operations from $\overline{O}_X, \overline{O}_Y$ (that are not in $P$). Function find_and_fix_order_violations() may perform an in-place sorting of operations. It may check the following operation pairs for order violations as determined in step 4 of phase 1: (1) $(o_{Xi}, o_{Xj})$, (2) $(o_{Yi}, o_{Yj})$, (3) $(p_i, p_j)$, (4) $(o_{Xi}, p_j)$, (5) $(o_{Yi}, p_j)$. If a violation is detected, the order of the two operations may be swapped, the corrected order may be added to reorderings and has_order_changed may be set to True. Eventually either a cycle is found in reorderings which is broken, or no more order violations are found in operations. In the first case break_cycle() may identify an operation $o_X$ in the cycle where manipulating replica $Y$ and the persisted state will dissolve a specific order dependency that involves $o_X$, turning the cycle into a chain (by creating and executing an operation that breaks a cycle 250). See below for an example. In the latter case the algorithm achieves convergence for both replicas, by iterating over each $o$ in operations and executing the detected operation on the corresponding other replica (thereby propagating the operations 260), followed by updating the persisted state. If $o \in P$ then only the persisted state is updated, because the effect of $o$ is already reflected in $X$ and $Y$. Subsequently the algorithm is finished 270.

In the following, an exemplary implementation for the four preparation steps is provided. For Step 1: File system model formalization, the definition of F presented earlier in the present disclosure may be used.

For Step 2: Conflict detection (e.g. determining the one or more conflicts), by examining the preconditions of the operations from the above table, the conflicts and pseudo-conflicts presented in the following two lists may be found. The $\otimes$ symbol may be used for two conflicting operations. Subscript letters $X$ and $Y$ may be used as placeholders that designate to which replica the operation (or parameter) applies (X = first repository, Y = second repository, or vice versa). The following list shows various types of conflicts (and pseudo-conflicts).

- Create-Create: On both replicas a new object was created with the same name under the same parent directory.

  Definition: $create_X(i_X,u_X,name_X) \otimes create_Y(i_Y,u_Y,name_Y) = [u_X= u_Y] \wedge [name_X= name_Y] \wedge [type_X(i_X) = dir \vee typey(i_Y) = dir \vee content_X(i_X) \neq content_Y(i_Y)]$ with $create := createdir \vee createfile'$.
  Violated precondition: $id(u,name) = error$

- Edit-Edit: The content of a file was changed on both replicas. Definition: $edit'_X(i_X,op_X) \otimes edit'_Y(i_Y,op_Y) = [i_X= i_Y] \wedge [content_X(i_X) \neq content_Y(i_Y)]$
  Violated precondition: technically no precondition is violated, but overwriting the file content on replica X with the one from replica Y would cause X's changes to be lost
- Move-Create: On one replica the user moved an object into a specific parent directory, assigning name $n$, on the other replica the user created a new object with the same name $n$ in the same parent directory.

  Definition: $create_X(i_X,u_X,name_X) \otimes move_Y(i_Y,u_Y,v_Y,name_Y) = [u_X=v_Y] \wedge [name_X=name_Y]$ with $create := createdir \vee createfile'$
  Violated preconditions: create: $id(u,name) = error$; move: $id(v,name) = error$

- Edit-Delete: On one replica a file's content was edited, on the other replica the corresponding file was deleted.

  Definition: $edit'_X(i_X,op_X) \otimes delete'_Y(i_Y,u_Y) = (i_X= i_Y)$
  Violated precondition: On replica Y, $ancestor(i_{root},i)$ of the $edit'$ operation is violated. On replica X there is no violation on the technical level, but on the semantic level: the changes of the edit operation would be lost.

- Move-Delete: On one replica an object was moved, on the other replica the corresponding object was deleted (either directly or as a consequence of deleting a parent directory). Definition: $move_X(i_X,u_X,v_X,name_X) \otimes delete'_Y(i_Y,u_Y) = (i_X= i_Y)$
  Violated precondition: On replica Y, $i \in list(u)$ of the $move$ operation is violated. On replica X there is no violation on the technical level, but on the semantic level: the changes of the structural change of the move operation would be lost. The user who deleted the object would have done so without knowing that it was recently moved by another user on the other replica.
- Move-Move (Source): On both replicas the same object was moved to a different location. That is, on each replica either the new name or parent directory (or both) differs. Definition: $move_X(i_X,u_X,v_X,name_X) \otimes move_Y(i_Y,u_Y,v_Y,name_Y) = (i_X= i_Y) \wedge [(v_X \neq v_Y) \vee (namex_X \neq name_Y)]$
  Violated precondition: on replica X: $i_Y \in list(u_Y)$; on replica Y: $i_X \in list(u_X)$. The source is no longer in the expected location
- Move-Move (Dest): The users of both replicas each moved a different object into the same parent directory, assigning the same name. The name of this conflict is Move-Move (Dest) because the conflict occurs at the destination.

  Definition: $move_X(i_X,u_X,v_X,name_X) \otimes move_Y(i_Y,u_Y,v_Y,name_Y) = (i_X \neq i_Y) \wedge (vx = v_Y) \wedge (name_X=name_Y)$
  Violated precondition: $id(v,name) = error$

- Move-ParentDelete: On one replica the user deleted directory $d$, on the other replica the user moved another object into $d$.
  Definition: $move_X(i_X,u_X,v_X,name_X) \otimes delete'_Y(i_Y,u_Y) = (v_X= i_Y) \wedge ancestor_Y(i_{root},i_X)$ Violated precondition: move: $type(v) = dir$
- Create-ParentDelete: On one replica the user deleted directory $d$, on the other replica the user creates a new object in $d$.

  Definition: $create_X(i_X,u_X,name_X) \otimes delete'_Y(i_Y,u_Y) = (u_X= iy)$ with $create := createdir \vee createfile'$
  Violated precondition: $type(u) = dir$

- Move-Move (Cycle): Given two synchronized directories $A$ and $B$ which are not in a parentchild relationship before the synchronization, $A$ was moved into $B$'s namespace on one replica while $B$ was moved into $A$'s namespace on the other replica. This would create a cyclic parentchild relationship in the merged result.
  Definition: $move_X(i_X,u_X,v_X,name_X) \otimes movey(i_Y,u_Y,v_Y,name_Y) = (type(i_X) = type(zy) = dir) \wedge \neg ancestor_{pre}(i_X,i_Y) \wedge$

$\neg ancestor_{pre}(i_Y,i_X) \wedge [ancestor(i_Y,v_X) \vee (iy= vx)] \wedge [ancestor(i_X,v_Y) \vee (i_X= vy)]$ where $ancestor_{pre}$ refers to the file system state before any operations (including the two move operations) were executed, and $ancestor$ to the state after all operations were executed. Violated precondition: create: $\neg ancestor(i,v)$

Pseudo-conflicts are presented in the following list, where $\odot$ indicates that two operations are pseudoconflicting:

- Edit-Edit: The content of a file was changed on both replicas, such that the content is now the same.
- Create-Create: On both replicas a new file was created with the same content and name under the same parent directory. It would also be possible to consider two createdir operations to pseudo-conflict and to merge the directory contents recursively. However, if this resolution is done automatically and is inappropriate, manual clean up work may be extensive.
- Delete-Delete: both replicas deleted the same object.
  Definition: $delete'_X(i_X, p_X) \odot delete'y(iy, p_Y) = (i_X=i_Y)$
- Move-Move: A specific object was moved to the same location.
  Definition: $move_X(i_X,u_X,v_X,name_X) \odot move_Y(i_Y,u_Y,v_Y,name_Y) = (i_X=i_Y) \wedge [(vx = v_Y) \wedge namex = name_Y]$

Step 3: Resolving conflicts. Who wins? The winner of a conflict (e.g. the winning operation) can be chosen in numerous ways. Either the user is explicitly involved in each decision, or conflicts are resolved automatically. For the latter the resolution strategy may be pre-configured, typically by the developer. To better customize the synchronizer to the user's work-flows, the present disclosure proposes to develop multiple conflict resolution strategies to choose from, where the choice may be given to the users or technically-apt administrators.

Name occupation conflicts: The Create-Create, Move-Create and Move-Move (Dest) conflicts all have in common that a specific name in a specific directory is being occupied by a create or move operation in each replica. A simple resolution approach is to modify (i.e. change) the loser operation (i.e. the losing operation), by renaming the object on the corresponding replica, appending unique suffix to the name. File extensions may be considered (and always be placed last) when appending the suffix. Exemplary, if a new file report.docx is created in both replicas (local and remote, e.g. both repositories, the first and second repository) in the root directory, and the resolution strategy is to let the remote replica win any name occupation conflict, then the file may be renamed to report-conflict-2019-01-10-Peter.docx. Such a name indicates to the user that the file is involved in a conflict and includes the date of the conflict resolution and the name of the user who lost the conflict.

Edit-Edit: When a specific file is edited on both replicas, undoing or modifying (i.e. changing) may not be possible because a replica may not store previous versions of a file. Resolving this conflict can either be achieved by renaming the loser file (and synchronizing it to the other replica, or keep it only on the loser replica), or backing up the loser file and overwriting it with the file of the winner replica, together with updating the lastmodified timestamp in the persisted state.

Delete conflicts: Both Edit-Delete and Move-Delete are conflicts where one operation changed the object, while the other one deleted it. Thus the resolution approach should be similar for both. When the resolution favors the delete operation, a Move-Delete conflict can be resolved by undoing the move, but since the edit operation of an Edit-Delete conflict cannot be undone, the only solution is to delete the file from the loser replica and persisted state, to avoid the redetection of the conflict. When the resolution favors the move or edit operation, the following approach is proposed:

- Edit-Delete: if the loser replica keeps deleted files in a garbage directory then restoring such files effectively undoes the delete operation. Otherwise the synchronizer can remove the file's entry from the persisted state only. In the next iteration, the file will be detected as createfile' operation and it will be synchronized to the loser replica.
- Move-Delete: the resolution works like for Edit-Delete conflicts. One caveat to consider is that when the move operation affects a directory, removing its entries from the database may cause orphaned entries for those child-objects that were moved out. For instance, given a directory at path '/d' and file '/d/f', with operations $move_X($'/d','/e'$), move_Y($'/d/f', '/f'$), delete'_Y($'/d'$)$. To restore the directory, deleting both the directory and its children from the persisted state is inappropriate, because then the $move_Y$ operation would be lost causing file $f$ to be duplicated. However, removing only those objects that were deleted on replica $Y$, here: '/d', would also be inappropriate, because $f$ would then be orphaned in the persisted state. It is proposed to move such orphaned objects temporarily to the root level in the persisted state and solve follow-up Move-Move (Source) conflicts in favor of replica $Y$.

Move-Move (Source): It is proposed to resolve this conflict type by undoing the loser move operation. It may be noted that undoing a move operation may not always be possible: the source parent directory $s$ might already be deleted, or the original name of the moved object might already be occupied in $s$, or the user could have moved $s$ such that it is now a child of the affected object. In case of such issues it is proposed to move the affected object to the root of the synchronized directory, with a random suffix added to its name.

Indirect conflicts: Two operations indirectly conflict with each other if they do not target the same but different objects, which are always in a hierarchical parent-child relationship. The Move-Move (Cycle) conflict, Move-ParentDelete and Create-ParentDelete belong to this category.

- Move-Move (Cycle) conflicts can be resolved exactly like Move-Move (Source) conflicts.
- Move-ParentDelete can be resolved by either undoing the deletion by restoring the deleted directory in its entirety (with all sub-objects), if possible, or to prefer the delete operation by undoing the move operation. The goal is to resolve this conflict in a way that avoids that both users are unhappy with the merged result. Exemplary, the two following resolution approaches would be a bad idea: (1) favor the move operation, by restoring only the deleted directory (and all its ancestor directories) targeted by the move operation, in order to make the move operation possible. This would partially undo the delete operation and cause an inconsistent namespace that would not be appreciated by either user. (2) Favor the delete operation by deleting the directory. This would cause the moved file to be deleted, which was not the intention of either user. In contrast, our solution only discards the intention for the user of the move operation.
- Resolving Create-ParentDelete conflicts works similarly. We also suggest to take precedence to the delete operation. Undoing the create operation would mean data loss, thus we suggest to back up the created object first, or to move it to the root of the synchronized directory, or to a garbage directory.

Pseudo conflicts: A pseudo conflict may be resolved by updating the entries of the affected objects in the persisted state, such that the two operations are no longer detected in the next iteration:

- Edit-Edit: resolve by updating $l_k$ in the persisted state
- Create-Create: resolve by inserting a new entry into the persisted state
- Delete-Delete: resolve by removing the entries of the affected objects from the persisted state
- Move-Move: resolve by updating $p_k$ and $n_k$ in the persisted state

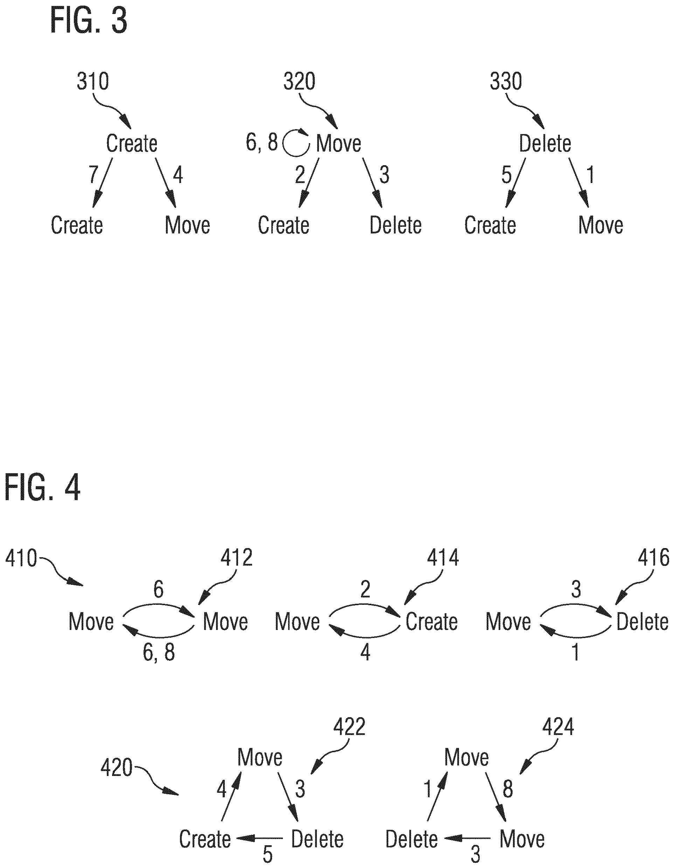

Step 4: Analysis of operation order dependencies: For F $OT$ = {$createfile$', $createtlir$, $move$, $edit$', $delete$'} may be chosen. Fig. 3 shows an overview of the eight order dependencies that were found for the operation types in $OT$. The arrows are denoted with a dependency number explained below:

1. $delete$ 'before $move$, e.g. user deletes an object at path "/x" and moves another object "/a" to "/x" (Fig. 3 330)
2. $move$ before $create$, e.g. user moves an object "/a" to "/b" and creates another object at "/a" (Fig. 3 320)
3. $move$ before $delete$', e.g. user moves object "/X/y" outside of directory "/X" (e.g. to "/z") and then deletes "/X" (Fig. 3 320)
4. $create$ before $move$, e.g. user creates directory "/X" and moves object "/y" into "/X" (Fig. 3 310)
5. $delete$ ' before $create$, e.g. user deletes object "/x" and then creates a new object at "/x" (Fig. 3 330)
6. $move$ before $move$ (occupation), e.g. user moves file "/a" to "/temp" and then moves file "/b" to "/a" (Fig. 3 320)
7. $create$ before $create$, e.g. user creates directory "/X" and then creates an object inside it (Fig. 3 310)
8. $move$ before $move$ (parent-child flip), e.g. user moves directory "/A/B" to "/C", then moves directory "/A" to "/C/A" (parent-child relationships are now flipped, Fig. 3 320)

Fig. 3 310 shows the order dependencies in which the first file system operation is create operation (4, 7), Fig. 3 320 shows the order dependencies in which the first file system operation is a move operation (2, 3, 6, 8) and Fig. 3 330 shows the order dependencies in which the first file system operation is a delete operation (1, 5).

Note:

- Due to the definition of the recursive $delete$ ' operation, a "delete file before deletedir" dependency is not explicitly listed (which would require that a child object is deleted before deleting its parent, as deletedir requires the directory to be empty)
- The edit operation is completely commutative and thus does not appear in above list. Due to the operation consolidation the only co-occurrence of an edit operation can be if an object is both edited and moved. However, both operations are commutative.

By connecting the dependencies, the cycles may be constructed. Fig. 4 shows a schematic diagram of cycles. Fig. 4 shows minimal cycles (with the smallest possible number of operations) in the first row 410, and two examples of more elaborate cycles in the second row 420. For example, two move operations may lead to a cycle 412 based on operation order dependencies 6 and 6 or 8, a move and a create operation may lead to a cycle 414 based on operation order dependencies 2 and 4, and a move and a delete operation may lead to a cycle 416 based on operation order dependencies 1 and 3. A move operation, a delete operation and a create operation may lead to a cycle 422 based on operation order dependencies 3, 5 and 4, respectively, and a first move operation, a second move operation and a delete operation may lead to a cycle 424 based on operation order dependencies 8, 3 and 1. Note that each cycle comprises at least one of operation order dependencies 1, 2, 5 and 6. It is noted that it is impossible to build cycles of only delete and create operations. It is also easy to prove that cycles that exclusively consist of move operations connected only by rule 8 are impossible (Intuitively, a proof by contradiction shows that the existence of a rule 8 cycle of $n$ objects would require that those $n$ objects also formed a cyclic parent-child relationship (before and after synchronization), but cycles are not allowed in F). Cycles always include at least one move operation. It is possible to find multiple cycles, but the length of each cycle (as well as the total number of cycles) may be limited, because cycles are based on detected operations, whose number is also limited. For any cycle found in replica $X$ there may always be at least one operation $ox$ (that affects object with ID $i$) which frees a location (i.e. that makes a file name available) that is used by a follow-up operation $o'x$. $o'_X$ may either be a move (situations 6+2) or a delete (situation 1+5) operation. Instead of executing $o_X$ we generate a different move operation $r_Y$ that breaks the cycle, $r_Y$ renames $i$ by appending a unique suffix to its name. We execute $r_Y$ on $Y$ and the persisted state. This way, $r_Y$ is not detected after restarting the algorithm, but $o_X$ still is detected because we did not modify $X$: if $o_X$ is a move operation, changing the name of $i$ in the persisted state to a unique name will still find $z$ as moved on $X$; if $o_X$ is a delete operation then it will still be deleted on $X$. However, the cycle is now broken, because the order dependency (6, 2, 1, or 5) no longer applies. It may be noted that if $ox E P$, i.e., $o_X$ is a pseudo-conflicting operation, $r_Y$ may only be executed on the persisted state, leaving both physical replicas $X, Y$ untouched.

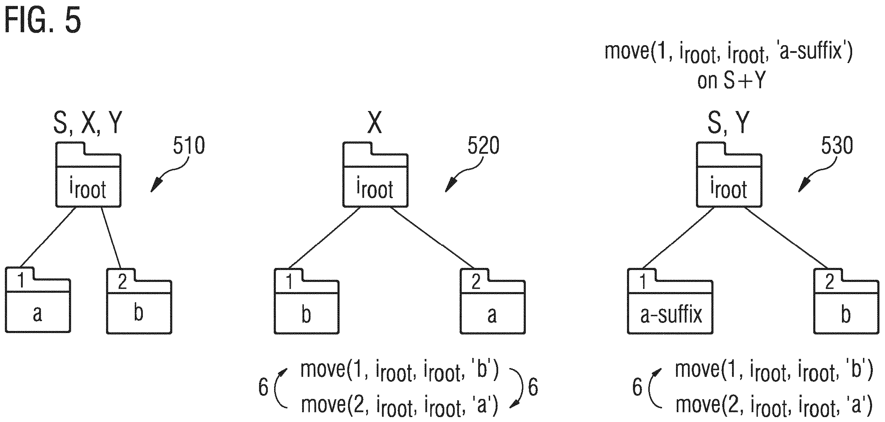

Fig. 5 illustrates how to break a cyclic order dependency. The first (left) sub-figure 510 shows the states of the two replicas (X, Y) and the persisted state (S), which are initially equal. Each object is shown with its name (e.g. a) and ID (e.g. 1). The next sub-figure 520 depicts the state on replica $X$ after the two objects were swapped using the three move operations as listed above which are detected as two move operations with a cyclic dependency. After applying the algorithm, which executes $r_Y = move(1, i_{root}, i_{root}, 'a\text{-} suffix')$ on $S$ and $Y$, the third sub-figure 530 depicts the state of $Y, S$. The two move operations are still detected, but the cycle has now become a chain. After applying the two operations in the depicted order (first moving b to a, followed by moving a-suffix to b), all states reach convergence.

The primary advantage of at least some embodiments is that the synchronization, specifically its reconciliation phase, completes without causing side effects. Proofs were omitted for brevity. Each individual step is designed to execute successfully (as in: cannot possibly fail) and solves a specific problem (resolve conflict, break cycle, build ordered list of operations), without introducing new problems. Thus the algorithm cannot get caught in an infinite loop. This advantage is most noticeable if users performed a large number of operations on one replica (e.g. the local disk) during an extended offline period, and the synchronizer then has to merge these changes with concurrent operations that happened on the other replica (e.g. the server). In this scenario most other approaches fail, sometimes even silently, which means that users are not aware of the failure until it is too late. The side effects of failure are diverse, including:

- The file system replicas may diverge, e.g. files are missing or not in the right place
- The synchronizer may create unexpected file and folder copies, which requires the user's time to clean up superfluous files,
- The synchronization may take an excessive amount of time, because the synchronizer retransmits objects which were actually moved or renamed by the user.

All these side effects result in additional time spent until the synchronization is complete, because the user has to remedy the situation, or wait longer than necessary for the synchronizer to finish. This wasted time translates into reduced productivity and increased costs. Our approach has the following additional advantages:

- Improved efficiency: the proposed algorithm saves time and bandwidth during synchronization, because move operations are always correctly detected in one replica and propagated to the other one, as move operations. In contrast other approaches who cannot deal with certain operation sequences involving move operations instead delete and create objects. Synchronizing move operations, however, completes much faster and uses only a few bytes of bandwidth, compared to retransmitting file payloads.
- Full operation traceability: operations done by users in replica X are propagated without modification to replica $Y$ by our algorithm. When other algorithms perform modifications, e.g. replace move with delete and create, these modifications no longer reflect the original intention, which is confusing to the user who looks at the operation log of the other replica to verify that the synchronizer correctly transmitted the user's operations.
- Conflict resolution:
  The conflict resolution approaches improve the user's intentions while avoiding high cleanup costs in those scenarios where the automatic resolution was inappropriate. By providing multiple resolution options for most conflicts, our approach provides configuration flexibility not found in other works.

As an alternative to the above-presented approach, an approach may be used that is not state-based at all, e.g. based on a log of operations. Alternatively, the same state-based update detection approach may be used, but with different file system model that does not support the move operation. In this case a file system model can be built where cycles are impossible. However, the disadvantages are that ignoring move operations makes synchronization much less efficient. To propagate non-conflicting operations the chosen approach is to analyze operation order dependencies and use that knowledge to sort operations. A different approach (that completely ignores order dependencies) is to build a difference graph $D(S,C)$ between the persisted state $S$ and the current state $C$ of each replica separately, iterating over the nodes to build in increasing depth order to build a valid operation sequence.

Embodiments may be used by file synchronizers that run on any kind of computing device that has any kind of connection to two file systems which may be synchronized by synchronizer software. The device types include (but are not limited to) mobile devices, servers or desktop machines. The file system may be connected to the device physically (e.g. a local disk) or via any means (e.g. cloud storage over the Internet, or local area network share). Embodiments may further be used by data replication systems (e.g. between databases run on servers) that use state-based update detection

More details and aspects of the approach and of the algorithm are mentioned in connection with the proposed concept or one or more examples described above (e.g. Fig. 1a to 1b). The approach or algorithm may comprise one or more additional optional features corresponding to one or more aspects of the proposed concept or one or more examples described above or below.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

**Claims**

1. A computer program having a program code for performing a method for synchronizing data between a first repository and a second repository when the computer program is executed on a computer, a processor, or a programmable hardware component, the first repository and second repository being based on an identifier-based file system that supports move operations, the method comprising:

   Obtaining (110) information related to a first plurality of file system operations that account for changes of a current state of the first repository vis-à-vis a previous state of the first repository;
   Obtaining (120) information related to a second plurality of file system operations that account for changes of a current state of the second repository vis-à-vis a previous state of the second repository;
   Determining (130) one or more conflicts between file system operations of the first plurality of file system operations and of the second plurality of file system operations, wherein each of the one or more conflicts occur between a first file system operation of the first plurality of file system operations and a second file system operation of the second plurality of file system operations;
   Resolving (140) the one or more conflicts to obtain a third plurality of file system operations comprising conflict-resolved versions of the first and second plurality of file system operations, wherein the resolving of the one or more conflicts comprises determining (142) a winning operation and a losing operation among the first and second file system operation based on a selection criterion, wherein resolving (140) the one or more conflicts comprises changing the losing operation to resolve the conflict, with the winning operation remaining unchanged;
   Reordering (150) the third plurality of file system operations based on operation order dependencies between the file system operations of the third plurality of file system operations, wherein the reordering of the third plurality of file system operations comprises detecting (152) of cycles in the reordering of the third plurality of file system operations, and resolving (154) the detected cycles, wherein each cycle comprises two or more operations of the third plurality of file system operations, wherein the two or more operations comprise a first file system operation that makes a file name available so the file name can be used by a second file system operation, wherein the resolving (154) of the respective cycle comprises inserting (156) an additional renaming operation to make the file name available; and
   Executing (170) the reordered third plurality of file system operations to synchronize the first repository and the second repository.

2. The computer program according to claim 1, wherein the resolving (140) of the one or more conflicts comprises sorting (144) the one or more conflicts based on a conflict sorting rule to identify a single conflict to be resolved, resolving (146) the single identified conflict, and resolving (148) the one or more conflicts that remain after the single identified conflict has been resolved.

3. The computer program according to claim 2, wherein the determining (130) of the one or more conflicts and the resolving (140) of the one or more conflicts are repeated after resolving the single identified conflict.

4. The computer program according to one of the claims 1 to 3, wherein the selection criterion is based on one of an estimated effort of a user for performing the respective operations, a logical location of the repositories the respective operations were performed on, and a user group of a user that has performed the respective operations.

5. The computer program according to one of the claims 1 to 4, wherein the method further comprises detecting (160) one or more pseudo-conflicts between file system operations of the first plurality of file system operations and of the second plurality of file system operations, wherein the one or more pseudo-conflicts each occur between operations that conflict syntactically while having the same effect.

6. The computer program according to claim 5, wherein the method further comprises resolving (162) the one or more pseudo-conflicts by modifying the previous states of the first repository or of the second repository based on detected pseudo-conflicts.

7. The computer program according to one of the claims 1 to 6, wherein the operation order dependencies are based on a ruleset of operation order dependencies, the ruleset of operation order dependencies defining operations that logically have to occur in a specific order.

8. The computer program according to claim 7, wherein the ruleset of order dependencies comprises one or more operation order dependencies that each define a logical order between a first file system operation and a second file system operation, wherein the one or more operation order dependencies comprise one or more of the following operation order dependencies:

a) an operation order dependency between the first file system operation and the second file system operation where the first file system operation makes a file name available so the file name can be used by the second file system operation,
b) an operation order dependency between the first file system operation and the second file system operation where the first file system operation results in a file or folder being present so that the file or folder can be used by the second file system operation,
c) an operation order dependency where the first file system operation moves a file or folder outside a folder that is deleted by the second file system operation,
d) an operation order dependency where the first and second file system operations are move operations affecting a first and second directory respectively, the first and second directories being in a parent-child relationship, both file system operations resulting in the first and second directory having a flipped parent-child relationship.

9. The computer program according to one of the claims 1 to 8, wherein the operations of the third plurality of file system operations are swapped in a pair-wise manner in the reordering (150) of the third plurality of file system operations based on the operation order dependencies.

10. The computer program according to claim 9, wherein the operations that are swapped in the reordering (150) of the third plurality of file system operations form a subset of operations of the third plurality of file system operations, wherein the cycles are detected in the reordering of the third plurality of file system operations by attempting to form cycles among the subset of operations of the third plurality of file system operations.

11. A method for synchronizing data between a first repository and a second repository the first repository and second repository being based on an identifier-based file system that supports move operations, the method comprising:

Obtaining (110) information related to a first plurality of file system operations that account for changes of a current state of the first repository vis-à-vis a previous state of the first repository;
Obtaining (120) information related to a second plurality of file system operations that account for changes of a current state of the second repository vis-à-vis a previous state of the second repository;
Determining (130) one or more conflicts between file system operations of the first plurality of file system operations and of the second plurality of file system operations, wherein each of the one or more conflicts occur between a first file system operation of the first plurality of file system operations and a second file system operation of the second plurality of file system operations;
Resolving (140) the one or more conflicts to obtain a third plurality of file system operations comprising conflict-resolved versions of the first and second plurality of file system operations, wherein the resolving of the one or more conflicts comprises determining (142) a winning operation and a losing operation among the first and second file system operation based on a selection criterion, wherein resolving (140) the one or more conflicts comprises changing the losing operation to resolve the conflict, with the winning operation remaining unchanged; and
Reordering (150) the third plurality of file system operations based on operation order dependencies between the file system operations of the third plurality of file system operations, wherein the reordering of the third plurality of file system operations comprises detecting (152) of cycles in the reordering of the third plurality of file system operations, and resolving (154) the detected cycles, wherein each cycle comprises two or more operations of the third plurality of file system operations, wherein the two or more operations comprise a first file system operation that makes a file name available so the file name can be used by a second file system operation, wherein the resolving (154) of the respective cycle comprises inserting (156) an additional renaming operation to make the file name available; and
Executing (170) the reordered third plurality of file system operations to synchronize the first repository and the second repository.

**EP 3 722 965 B1**

**Patentansprüche**

1. Ein Computerprogramm mit einem Programmcode zum Durchführen eines Verfahrens zum Synchronisieren von Daten zwischen einem ersten Repository und einem zweiten Repository, wenn das Computerprogramm auf einem Computer, einem Prozessor oder einer programmierbaren Hardwarekomponente ausgeführt wird, wobei das erste Repository und das zweite Repository auf einem identifiziererbasierten Dateisystem basieren, das Verschiebeoperationen unterstützt, das Verfahren umfassend:

   Erhalten (110) von Informationen in Bezug auf eine erste Vielzahl von Dateisystemoperationen, die Änderungen eines aktuellen Zustands des ersten Repositorys gegenüber einem vorherigen Zustand des ersten Repositorys berücksichtigen;
   Erhalten (120) von Informationen in Bezug auf eine zweite Vielzahl von Dateisystemoperationen, die Änderungen eines aktuellen Zustands des zweiten Repositorys gegenüber einem vorherigen Zustand des zweiten Repositorys berücksichtigen;
   Bestimmen (130) eines oder mehrerer Konflikte zwischen Dateisystemoperationen der ersten Vielzahl von Dateisystemoperationen und der zweiten Vielzahl von Dateisystemoperationen, wobei jeder von dem einen oder den mehreren Konflikten zwischen einer ersten Dateisystemoperation der ersten Vielzahl von Dateisystemoperationen und einer zweiten Dateisystemoperation der zweiten Vielzahl von Dateisystemoperationen auftritt;
   Lösen (140) des einen oder der mehreren Konflikte, um eine dritte Vielzahl von Dateisystemoperationen zu erhalten, die konfliktaufgelöste Versionen der ersten und zweiten Vielzahl von Dateisystemoperationen umfassen, wobei das Lösen des einen oder der mehreren Konflikte ein Bestimmen (142) einer gewinnenden Operation und einer verlierenden Operation unter der ersten und zweiten Dateisystemoperation basierend auf einem Auswahlkriterium umfasst, wobei das Lösen (140) des einen oder der mehreren Konflikte ein Ändern der verlierenden Operation umfasst, um den Konflikt zu lösen, wobei die gewinnende Operation unverändert bleibt;
   Neuordnen (150) der dritten Vielzahl von Dateisystemoperationen basierend auf Operationsreihenfolgeabhängigkeiten zwischen den Dateisystemoperationen der dritten Vielzahl von Dateisystemoperationen, wobei das Neuordnen der dritten Vielzahl von Dateisystemoperationen ein Detektieren (152) von Zyklen in der Neuordnung der dritten Vielzahl von Dateisystemoperationen und ein Auflösen (154) der detektierten Zyklen umfasst, wobei jeder Zyklus zwei oder mehr Operationen der dritten Vielzahl von Dateisystemoperationen umfasst, wobei die zwei oder mehr Operationen eine erste Dateisystemoperation umfassen, die einen Dateinamen verfügbar macht, sodass der Dateiname durch eine zweite Dateisystemoperation verwendet werden kann, wobei das Auflösen (154) des jeweiligen Zyklus ein Einfügen (156) einer zusätzlichen Umbenennungsoperation umfasst, um den Dateinamen verfügbar zu machen; und
   Ausführen (170) der neu geordneten dritten Vielzahl von Dateisystemoperationen, um das erste Repository und das zweite Repository zu synchronisieren.

2. Das Computerprogramm gemäß Anspruch 1, wobei das Lösen (140) des einen oder der mehreren Konflikte ein Sortieren (144) des einen oder der mehreren Konflikte basierend auf einer Konfliktsortierregel, um einen einzelnen zu lösenden Konflikt zu identifizieren, ein Lösen (146) des einzelnen identifizierten Konflikts und ein Lösen (148) des einen oder der mehreren Konflikte, die verbleiben, nachdem der einzelne identifizierte Konflikt gelöst wurde, umfasst.

3. Das Computerprogramm gemäß Anspruch 2, wobei das Bestimmen (130) des einen oder der mehreren Konflikte und das Lösen (140) des einen oder der mehreren Konflikte nach dem Lösen des einzelnen identifizierten Konflikts wiederholt werden.

4. Das Computerprogramm gemäß einem der Ansprüche 1 bis 3, wobei das Auswahlkriterium auf einem von einem geschätzten Aufwand eines Benutzers für das Durchführen der jeweiligen Operationen, einem logischen Ort der Repositorys, an denen die jeweiligen Operationen durchgeführt wurden, und einer Benutzergruppe eines Benutzers, der die jeweiligen Operationen durchgeführt hat, basiert.

5. Das Computerprogramm gemäß einem der Ansprüche 1 bis 4, wobei das Verfahren ferner ein Detektieren (160) eines oder mehrerer Pseudokonflikte zwischen Dateisystemoperationen der ersten Vielzahl von Dateisystemoperationen und der zweiten Vielzahl von Dateisystemoperationen umfasst, wobei der eine oder die mehreren Pseudokonflikte jeweils zwischen Operationen auftreten, die syntaktisch in Konflikt stehen, während sie den gleichen Effekt haben.

6. Das Computerprogramm gemäß Anspruch 5, wobei das Verfahren ferner ein Lösen (162) des einen oder der mehreren Pseudokonflikte durch Modifizieren der vorherigen Zustände des ersten Repositorys oder des zweiten Repositorys basierend auf detektierten Pseudokonflikten umfasst.

7. Das Computerprogramm gemäß einem der Ansprüche 1 bis 6, wobei die Operationsreihenfolgeabhängigkeiten auf einem Regelsatz von Operationsreihenfolgeabhängigkeiten basieren, wobei der Regelsatz von Operationsreihenfolgeabhängigkeiten Operationen definiert, die logisch in einer spezifischen Reihenfolge auftreten müssen.

8. Das Computerprogramm gemäß Anspruch 7, wobei der Regelsatz von Reihenfolgeabhängigkeiten eine oder mehrere Operationsreihenfolgeabhängigkeiten umfasst, die jeweils eine logische Reihenfolge zwischen einer ersten Dateisystemoperation und einer zweiten Dateisystemoperation definieren, wobei die eine oder die mehreren Operationsreihenfolgeabhängigkeiten eine oder mehrere der folgenden Operationsreihenfolgeabhängigkeiten umfassen:

a) eine Operationsreihenfolgeabhängigkeit zwischen der ersten Dateisystemoperation und der zweiten Dateisystemoperation, wobei die erste Dateisystemoperation einen Dateinamen verfügbar macht, sodass der Dateiname durch die zweite Dateisystemoperation verwendet werden kann,
b) eine Operationsreihenfolgeabhängigkeit zwischen der ersten Dateisystemoperation und der zweiten Dateisystemoperation, wobei die erste Dateisystemoperation dazu führt, dass eine Datei oder ein Ordner vorhanden ist, sodass die Datei oder der Ordner durch die zweite Dateisystemoperation verwendet werden kann,
c) eine Operationsreihenfolgeabhängigkeit, wobei die erste Dateisystemoperation eine Datei oder einen Ordner außerhalb eines Ordners verschiebt, der durch die zweite Dateisystemoperation gelöscht wird,
d) eine Operationsreihenfolgeabhängigkeit, wobei die erste und die zweite Dateisystemoperation Verschiebeoperationen sind, die jeweils ein erstes und ein zweites Verzeichnis beeinflussen, wobei das erste und das zweite Verzeichnis in einer Eltern-Kind-Beziehung stehen, wobei beide Dateisystemoperationen dazu führen, dass das erste und das zweite Verzeichnis eine umgekehrte Eltern-Kind-Beziehung aufweisen.

9. Das Computerprogramm gemäß einem der Ansprüche 1 bis 8, wobei die Operationen der dritten Vielzahl von Dateisystemoperationen bei der Neuordnung (150) der dritten Vielzahl von Dateisystemoperationen basierend auf den Operationsreihenfolgeabhängigkeiten paarweise vertauscht werden.

10. Das Computerprogramm gemäß Anspruch 9, wobei die Operationen, die bei der Neuordnung (150) der dritten Vielzahl von Dateisystemoperationen vertauscht werden, eine Teilmenge von Operationen der dritten Vielzahl von Dateisystemoperationen bilden, wobei die Zyklen in der Neuordnung der dritten Vielzahl von Dateisystemoperationen durch den Versuch, Zyklen unter der Teilmenge von Operationen der dritten Vielzahl von Dateisystemoperationen zu bilden, detektiert werden.

11. Ein Verfahren zum Synchronisieren von Daten zwischen einem ersten Repository und einem zweiten Repository, wobei das erste Repository und das zweite Repository auf einem identifiziererbasierten Dateisystem basieren, das Verschiebeoperationen unterstützt, das Verfahren umfassend:

Erhalten (110) von Informationen in Bezug auf eine erste Vielzahl von Dateisystemoperationen, die Änderungen eines aktuellen Zustands des ersten Repositorys gegenüber einem vorherigen Zustand des ersten Repositorys berücksichtigen;
Erhalten (120) von Informationen in Bezug auf eine zweite Vielzahl von Dateisystemoperationen, die Änderungen eines aktuellen Zustands des zweiten Repositorys gegenüber einem vorherigen Zustand des zweiten Repositorys berücksichtigen;
Bestimmen (130) eines oder mehrerer Konflikte zwischen Dateisystemoperationen der ersten Vielzahl von Dateisystemoperationen und der zweiten Vielzahl von Dateisystemoperationen, wobei jeder von dem einen oder den mehreren Konflikten zwischen einer ersten Dateisystemoperation der ersten Vielzahl von Dateisystemoperationen und einer zweiten Dateisystemoperation der zweiten Vielzahl von Dateisystemoperationen auftritt;
Lösen (140) des einen oder der mehreren Konflikte, um eine dritte Vielzahl von Dateisystemoperationen zu erhalten, die konfliktaufgelöste Versionen der ersten und zweiten Vielzahl von Dateisystemoperationen umfassen, wobei das Lösen des einen oder der mehreren Konflikte ein Bestimmen (142) einer gewinnenden Operation und einer verlierenden Operation unter der ersten und zweiten Dateisystemoperation basierend auf einem Auswahlkriterium umfasst, wobei das Lösen (140) des einen oder der mehreren Konflikte ein Ändern der verlierenden Operation umfasst, um den Konflikt zu lösen, wobei die gewinnende Operation unverändert bleibt; und
Neuordnen (150) der dritten Vielzahl von Dateisystemoperationen basierend auf Operationsreihenfolgeabhängigkeiten zwischen den Dateisystemoperationen der dritten Vielzahl von Dateisystemoperationen, wobei das Neuordnen der dritten Vielzahl von Dateisystemoperationen ein Detektieren (152) von Zyklen in der Neuordnung der dritten Vielzahl von Dateisystemoperationen und ein Auflösen (154) der detektierten Zyklen umfasst, wobei jeder Zyklus zwei oder mehr Operationen der dritten Vielzahl von Dateisystemoperationen umfasst, wobei die zwei oder mehr Operationen eine erste Dateisystemoperation umfassen, die einen Dateinamen verfügbar macht, sodass der Dateiname durch eine zweite Dateisystemoperation verwendet werden kann, wobei das Auflösen (154) des jeweiligen Zyklus ein Einfügen (156) einer zusätzlichen Umbenennungsoperation umfasst, um den Dateinamen verfügbar zu machen; und

Ausführen (170) der neu geordneten dritten Vielzahl von Dateisystemoperationen, um das erste Repository und das zweite Repository zu synchronisieren.

**Revendications**

1. Programme d'ordinateur ayant un code de programme pour exécuter un procédé pour synchroniser des données entre un premier référentiel et un deuxième référentiel lorsque le programme d'ordinateur est exécuté sur un ordinateur, un processeur ou un composant matériel programmable, le premier référentiel et le deuxième référentiel étant basés sur un système de fichiers à base d'identifiant qui prend en charge des opérations de déplacement, le procédé comprenant le fait de :

obtenir (110) des informations relatives à une première pluralité d'opérations de système de fichiers qui tiennent compte de changements d'un état actuel du premier référentiel par rapport à un état précédent du premier référentiel ;

obtenir (120) des informations relatives à une deuxième pluralité d'opérations de système de fichiers qui tiennent compte de changements d'un état actuel du deuxième référentiel par rapport à un état précédent du deuxième référentiel ;

déterminer (130) un ou plusieurs conflits entre des opérations de système de fichiers de la première pluralité d'opérations de système de fichiers et de la deuxième pluralité d'opérations de système de fichiers, chacun du ou des conflits se produisant entre une première opération de système de fichiers de la première pluralité d'opérations de système de fichiers et une deuxième opération de système de fichiers de la deuxième pluralité d'opérations de système de fichiers ;

résoudre (140) le ou les conflits pour obtenir une troisième pluralité d'opérations de système de fichiers comprenant des versions résolues en conflit de la première et de la deuxième pluralité d'opérations de système de fichiers, le fait de résoudre le ou les conflits comprenant le fait de déterminer (142) une opération gagnante et une opération perdante parmi la première et la deuxième opération de système de fichiers sur la base d'un critère de sélection, le fait de résoudre (140) le ou les conflits comprenant le fait de modifier l'opération perdante afin de résoudre le conflit, l'opération gagnante demeurant inchangée ;

réorganiser (150) la troisième pluralité d'opérations de système de fichiers sur la base de dépendances d'ordre d'opération entre les opérations de système de fichiers de la troisième pluralité d'opérations de système de fichiers, le fait de réorganiser la troisième pluralité d'opérations de système de fichiers comprenant le fait de détecter (152) des cycles dans la réorganisation de la troisième pluralité d'opérations de système de fichiers et le fait de résoudre (154) les cycles détectés, chaque cycle comprenant deux ou plusieurs opérations de la troisième pluralité d'opérations de système de fichiers, les deux ou plusieurs opérations comprenant une première opération de système de fichiers qui rend un nom de fichier disponible de sorte que le nom de fichier puisse être utilisé par une deuxième opération de système de fichiers, le fait de résoudre (154) le cycle respectif comprenant le fait d'insérer (156) une opération de renommage supplémentaire pour rendre le nom de fichier disponible ; et

exécuter (170) la troisième pluralité réorganisée d'opérations de système de fichiers pour synchroniser le premier référentiel et le deuxième référentiel.

2. Programme d'ordinateur selon la revendication 1, le fait de résoudre (140) le ou les conflits comprenant le fait de trier (144) le ou les conflits sur la base d'une règle de tri des conflits afin d'identifier un conflit unique à résoudre, le fait de résoudre (146) le conflit unique identifié et le fait de résoudre (148) le ou les conflits qui subsistent après que le conflit unique identifié a été résolu.

3. Programme d'ordinateur selon la revendication 2, le fait de déterminer (130) le ou les conflits et le fait de résoudre (140) le ou les conflits étant répétés après la résolution du conflit unique identifié.

**4.** Programme d'ordinateur selon l'une des revendications 1 à 3, le critère de sélection étant basé sur l'un parmi un effort estimé d'un utilisateur pour effectuer les opérations respectives, un emplacement logique des référentiels sur lesquels les opérations respectives ont été effectuées, et un groupe d'utilisateurs d'un utilisateur qui a effectué les opérations respectives.

**5.** Programme d'ordinateur selon l'une des revendications 1 à 4, le procédé comprenant en outre le fait de détecter (160) un ou plusieurs pseudo-conflits entre des opérations de système de fichiers de la première pluralité d'opérations de système de fichiers et de la deuxième pluralité d'opérations de système de fichiers, le ou les pseudo-conflits se produisant chacun entre des opérations qui entrent en conflit syntaxiquement tout en ayant le même effet.

**6.** Programme d'ordinateur selon la revendication 5, le procédé comprenant en outre le fait de résoudre (162) le ou les pseudo-conflits en modifiant les états précédents du premier référentiel ou du deuxième référentiel sur la base de pseudo-conflits détectés.

**7.** Programme d'ordinateur selon l'une des revendications 1 à 6, les dépendances d'ordre d'opération étant basées sur un ensemble de règles de dépendances d'ordre d'opération, l'ensemble de règles de dépendances d'ordre d'opération définissant des opérations qui doivent logiquement se produire dans un ordre spécifique.

**8.** Programme d'ordinateur selon la revendication 7, l'ensemble de règles de dépendances d'ordre comprenant une ou plusieurs dépendances d'ordre d'opération qui définissent chacune un ordre logique entre une première opération de système de fichiers et une deuxième opération de système de fichiers, la ou les dépendances d'ordre d'opération comprenant une ou plusieurs des dépendances d'ordre d'opération suivantes :

a) une dépendance d'ordre d'opération entre la première opération de système de fichiers et la deuxième opération de système de fichiers, la première opération de système de fichiers rendant un nom de fichier disponible de sorte que le nom de fichier puisse être utilisé par la deuxième opération de système de fichiers,
b) une dépendance d'ordre d'opération entre la première opération de système de fichiers et la deuxième opération de système de fichiers, la première opération de système de fichiers ayant pour résultat la présence d'un fichier ou d'un dossier, de sorte que le fichier ou le dossier puisse être utilisé par la deuxième opération de système de fichiers,
c) une dépendance d'ordre d'opérations dans laquelle la première opération de système de fichiers déplace un fichier ou un dossier en dehors d'un dossier qui est supprimé par la deuxième opération de système de fichiers,
d) une dépendance d'ordre d'opération dans laquelle la première et la deuxième opération de système de fichiers sont des opérations de déplacement affectant respectivement un premier et un deuxième répertoire, le premier et le deuxième répertoire étant dans une relation parent-enfant, les deux opérations de système de fichiers ayant pour résultat que le premier et le deuxième répertoire ont une relation parent-enfant inversée.

**9.** Programme d'ordinateur selon l'une des revendications 1 à 8, les opérations de la troisième pluralité d'opérations de système de fichiers étant permutées par paires lors de la réorganisation (150) de la troisième pluralité d'opérations de système de fichiers sur la base des dépendances d'ordre d'opération.

**10.** Programme d'ordinateur selon la revendication 9, les opérations qui sont permutées lors de la réorganisation (150) de la troisième pluralité d'opérations de système de fichiers formant un sous-ensemble d'opérations de la troisième pluralité d'opérations de système de fichiers, les cycles étant détectés lors de la réorganisation de la troisième pluralité d'opérations de système de fichiers en tentant de former des cycles parmi le sous-ensemble d'opérations de la troisième pluralité d'opérations de système de fichiers.

**11.** Procédé pour synchroniser des données entre un premier référentiel et un deuxième référentiel, le premier référentiel et le deuxième référentiel étant basés sur un système de fichiers à base d'identifiant qui prend en charge des opérations de déplacement, le procédé comprenant le fait de :

obtenir (110) des informations relatives à une première pluralité d'opérations de système de fichiers qui tiennent compte de changements d'un état actuel du premier référentiel par rapport à un état précédent du premier référentiel ;
obtenir (120) des informations relatives à une deuxième pluralité d'opérations de système de fichiers qui tiennent compte de changements d'un état actuel du deuxième référentiel par rapport à un état précédent du deuxième référentiel ;
déterminer (130) un ou plusieurs conflits entre des opérations de système de fichiers de la première pluralité d'opérations de système de fichiers et de la deuxième pluralité d'opérations de système de fichiers, chacun du ou des conflits se produisant entre une première opération de système de fichiers de la première pluralité d'opérations de système de fichiers et une deuxième opération de système de fichiers de la deuxième pluralité d'opérations de système de fichiers ;

résoudre (140) le ou les conflits pour obtenir une troisième pluralité d'opérations de système de fichiers comprenant des versions résolues en conflit de la première et de la deuxième pluralité d'opérations de système de fichiers, le fait de résoudre le ou les conflits comprenant le fait de déterminer (142) une opération gagnante et une opération perdante parmi la première et la deuxième opération de système de fichiers sur la base d'un critère de sélection, le fait de résoudre (140) le ou les conflits comprenant le fait de modifier l'opération perdante afin de résoudre le conflit, l'opération gagnante demeurant inchangée ; et

réorganiser (150) la troisième pluralité d'opérations de système de fichiers sur la base de dépendances d'ordre d'opération entre les opérations de système de fichiers de la troisième pluralité d'opérations de système de fichiers, le fait de réorganiser la troisième pluralité d'opérations de système de fichiers comprenant le fait de détecter (152) des cycles dans la réorganisation de la troisième pluralité d'opérations de système de fichiers et le fait de résoudre (154) les cycles détectés, chaque cycle comprenant deux ou plusieurs opérations de la troisième pluralité d'opérations de système de fichiers, les deux ou plusieurs opérations comprenant une première opération de système de fichiers qui rend un nom de fichier disponible de sorte que le nom de fichier puisse être utilisé par une deuxième opération de système de fichiers, le fait de résoudre (154) le cycle respectif comprenant le fait d'insérer (156) une opération de renommage supplémentaire pour rendre le nom de fichier disponible ; et

exécuter (170) la troisième pluralité réorganisée d'opérations de système de fichiers pour synchroniser le premier référentiel et le deuxième référentiel.

# FIG. 1a

| | |
|---|---|
| OBTAINING INFORMATION RELATED TO A FIRST PLURALITY OF FILE SYSTEM OPERATIONS | ~110 |
| OBTAINING INFORMATION RELATED TO A SECOND PLURALITY OF FILE SYSTEM OPERATIONS | ~120 |
| DETERMINING ONE OR MORE CONFLICTS | ~130 |
| RESOLVING THE ONE OR MORE CONFLICTS | ~140 |
| REORDERING A THIRD PLURALITY OF FILE SYSTEM OPERATIONS | ~150 |
| DETECTING CYCLES | ~152 |
| RESOLVING CYCLES | ~154 |

# FIG. 1b

OBTAINING INFORMATION RELATED TO A FIRST
PLURALITY OF FILE SYSTEM OPERATIONS ~110

OBTAINING INFORMATION RELATED TO A SECOND
PLURALITY OF FILE SYSTEM OPERATIONS ~120

DETERMINING ONE OR MORE CONFLICTS ~130

RESOLVING THE ONE OR MORE CONFLICTS ~140

DETERMING A WINNING OPERATION ~142

SORTING THE ONE OR MORE CONFLICTS ~144

RESOLVING A SINGLE CONFLICT ~146

RESOLVING ONE OR MORE CONFLICTS THAT REMAIN ~148

REORDERING A THIRD PLURALITY
OF FILE SYSTEM OPERATIONS ~150

DETECTING CYCLES ~152

RESOLVING CYCLES ~154

INSERTING AN ADDITIONAL RENAMING OPERATION ~156

DETECTING ONE OR MORE PSEUDO CONFLICTS ~160

RESOLVING THE ONE OR MORE PSEUDO CONFLICTS ~162

EXECUTING THE REORDERED THIRD
PLURALITY OF FILE SYSTEM OPERATIONS ~170

# FIG. 2

Legend: Flow ——▶  Input --▶  Output -·-▶

214 Persisted file system state

216 Operations $\bar{O}_X, \bar{O}_Y$

224 Pseudo-contacts P

210 Detect operations for both replicas

220 Find conflicts

Conflicts found? No / Yes

240 Sort operations, find cycles

Cycles found? No / Yes

260 Propagate operations

270 Finished

250 Create and execute operation that breaks a cycle

230 Sort conflicts

232 Create and execute operation that solves the first conflict

212 Current file system state

222 Conflicts C

Start

EP 3 722 965 B1

# FIG. 3

# FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060242444 A1
- US 2010082534 A1

- US 7165248 B2